# EUROPEAN PATENT SPECIFICATION

(11) **EP 2 942 582 B1**
(45) Date of publication and mention of the grant of the patent: **31.05.2017**
(21) Application number: 15161488.0
(22) Date of filing: 27.03.2015
(51) Int. Cl.: F24F 13/28, B03C 3/49, F24F 3/16, F24F 1/00, F24F 13/08

(54) **FILTER FOR ELECTRIC DUST COLLECTOR, ELECTRIC DUST COLLECTOR, AND AIR CONDITIONER**
FILTER FÜR ELEKTROSTAUBABSCHEIDER, ELEKTROSTAUBABSCHEIDER UND KLIMAANLAGE
FILTRE POUR COLLECTEUR DE POUSSIÈRE ÉLECTRIQUE, COLLECTEUR DE POUSSIÈRE ÉLECTRIQUE ET CLIMATISEUR

(30) Priority: 27.03.2014 JP 2014066210; 28.03.2014 JP 2014068319
(43) Date of publication of application: 11.11.2015
(73) Proprietor: Fujitsu General Limited, Kanagawa 213-8502 (JP)
(72) Inventor: Iwano, Syun, Kawasaki-shi, Kanagawa 213-8502 (JP); Okuno, Hiroki, Kawasaki-shi, Kanagawa 213-8502 (JP); Hayashi, Yusuke, Kawasaki-shi, Kanagawa 213-8502 (JP); Hirokawa, Yasuaki, Kawasaki-shi, Kanagawa 213-8502 (JP); Aoki, Hironori, Kawasaki-shi, Kanagawa 213-8502 (JP)
(74) Representative: Kreutzer, Ulrich

(56) References cited:
- JP-A- 2004 286 418
- JP-A- 2008 190 819
- JP-A- 2010 017 662
- JP-A- 2011 208 876
- JP-A- 2012 047 353
- JP-B2- 4 636 990

## Description

### BACKGROUND

### 1. Technical Field

This disclosure relates to a filter for an electric dust collector, an electric dust collector, and an air conditioner.

### 2. Related Art

For example, as disclosed in Japanese Patent No. 4270234, Japanese Patent No. 4636990, and JP-A-2008-190819, a pre-filter is generally incorporated in an air conditioner. The pre-filter removes dust from airflow. In a heat exchanger, accumulation of the dust is prevented.

### SUMMARY

A filter for an electric dust collector according to embodiments of this disclosure includes: a conductive filter frame for surrounding a passage of airflow along a transverse plane that traverses the passage by being supported by a casing of the electric duct collector; and a mesh sheet arranged along the transverse plane, coupled to the filter frame, and having a conductive material at least partially on a surface of the mesh sheet, the conductive material being connected to the filter frame.

### BRIEF DESCRIPTION OF DRAWINGS

Fig. 1 is a conceptual view that schematically illustrates a configuration of an air conditioner according to an embodiment of this disclosure;
Fig. 2 is a perspective view that schematically illustrates an external appearance of an indoor unit according to the embodiment;
Fig. 3 is a perspective view that schematically illustrates a configuration of a body of the indoor unit;
Fig. 4 is an exploded perspective view that schematically illustrates a structure of the indoor unit;
Fig. 5 is an enlarged perspective view that schematically illustrates a structure of an air filter;
Fig. 6 is a cross-sectional view taken along line A-A in Fig. 5;
Fig. 7 is an enlarged perpendicular cross-sectional view of the body of the indoor unit;
Fig. 8 is an enlarged perpendicular cross-sectional view of the body of the indoor unit that corresponds to Fig. 7 and schematically illustrates a situation of a passage for airflow;
Fig. 9 is an enlarged perpendicular cross-sectional view of the body that corresponds to Fig. 8 and illustrates an upper limit position of the air filter;
Fig. 10 is an enlarged perpendicular cross-sectional view that corresponds to Fig. 8 and illustrates a lower limit position of the air filter;
Fig. 11 is an enlarged cross-sectional view that schematically illustrates a principle of an electric dust collecting action;
Fig. 12 is an exploded perspective view that schematically illustrates a configuration of an air cleaner according to an embodiment of this disclosure;
Fig. 13 is an exploded perspective view that schematically illustrates a configuration of an air cleaner according to another embodiment;
Fig. 14 is an exploded perspective view that schematically illustrates a configuration of a ventilator according to an embodiment of this disclosure;
Fig. 15 is a conceptual view that schematically illustrates a configuration of a clean room according to an embodiment of this disclosure;
Fig. 16 is an exploded perspective view that schematically illustrates a structure of an indoor unit;
Fig. 17 is an enlarged perspective view that schematically illustrates a structure of an air filter;
Fig. 18 is an enlarged cross-sectional view of a body of the indoor unit; and
Fig. 19 is an enlarged cross-sectional view that schematically illustrates a principle of an electric dust collecting action of the indoor unit according to a second embodiment.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Dust particles that are larger than a mesh size of a pre-filter are entangled and caught by a mesh sheet of the pre-filter. In contrast, fine particles of dust or the like that are smaller than the mesh size pass through the mesh sheet. If the mesh size of the mesh sheet is decreased, the cleanliness degree of the airflow which passes through the mesh sheet is improved. However, the air flow resistance of the airflow is increased. For this reason, cooling and warming capabilities of the air conditioner are degraded.

In view of the above, a pre-filter that functions as an electrostatic filter for catching dust particles smaller than a mesh size is disclosed in JP-A-2008-190819. In this pre-filter, a conductive film made of stainless steel is formed on a surface of a resin fiber net. Then, ions are dispersed from an ion electrode. The ions are poured onto the conductive film of the pre-filter. The potential of the ions is maintained on a surface of the pre-filter. However, such a pre-filter cannot catch dust that is not charged with a reverse potential. Accordingly, such dust passes through the pre-filter. Thus, the dust particles smaller than the mesh size are not caught as being expected.

According to some aspects of this disclosure, it is possible to provide an electric dust collector and an air conditioner that can increase the cleanliness degree of airflow without increasing the air flow resistance of the airflow.

An embodiment of this disclosure relate to a filter for an electric dust collector that includes: a conductive filter frame for surrounding a passage of airflow along a transverse plane that traverses the passage by being supported by a casing of the electric duct collector; and a mesh sheet arranged along the transverse plane, coupled to the filter frame, and having a conductive material at least partially on a surface of the mesh sheet, the conductive material being connected to the filter frame.

The filter can be attached to or detached from the casing of the electric dust collector. The filter frame is formed to have higher strength than the mesh sheet. Accordingly, the filter mesh sheet can be electrically connected to a ground potential via the filter frame. Thus, the damage of the filter mesh sheet can be prevented.

Here, the filter mesh sheet can have a conductive film as the conductive material at least on a second surface on an opposite side of a first surface that receives the airflow. At this time, the filter frame may be in contact with a surface of the conductive film. Dust particles larger than a mesh size of the filter mesh sheet are entangled by the first surface of the filter mesh sheet. Fine particles smaller than the mesh size are adhered to the second surface of the filter mesh sheet. The filter frame is fixed to the second surface of the filter mesh sheet. Accordingly, the flatness of the first surface of the filter mesh sheet is secured. Thus, by cleaning the first surface of the filter mesh sheet with use of a brush with short bristles, the dust can be reliably scraped off from the first surface. On the second surface of the filter mesh sheet, the adhesive force of the fine particles is weakened because electric charges are transferred to the ground. Thus, even when the filter frame causes unevenness of the second surface, the second surface can be cleaned relatively easily.

The filter mesh sheet has plural fibers that traverse the passage. The conductive material may be connected to the filter frame for each fiber. Accordingly, a current passage for each fiber is secured between the filter mesh sheet and the filter frame. The filter mesh sheet is electrically connected to the filter frame in an extensive region. The electric charges can efficiently flow between the filter mesh sheet and the filter frame. When the potential of the filter mesh sheet is dropped to the ground, the filter mesh sheet has a slight electric resistance. However, the electric charges can flow from the filter mesh sheet into the filter frame. Thus, charging of the filter mesh sheet can be reliably prevented.

The first surface of the filter mesh sheet may be formed of an insulating body. The adhesion of fine particles can be prevented on the first surface of the filter mesh sheet. The first surface of the filter mesh sheet can be easily cleaned by simply removing dust particles larger than the mesh size from the first surface.

The filter mesh sheet may have conductive fibers which are arranged to traverse the passage and function as the conductive material. At this time, each conductive fiber may be connected to the filter frame. Accordingly, a current passage for each fiber is secured between the filter mesh sheet and the filter frame. The filter mesh sheet is electrically connected to the filter frame in an extensive region. Thus, electric charges can efficiently flow between the filter mesh sheet and the filter frame. Even when the potential of the filter mesh sheet is dropped to the ground, the charging of the filter mesh sheet can be reliably avoided.

In the filter for the electric dust collector, the filter frame can be formed of a conductive resin material. Accordingly, the filter frame can have flexibility while keeping certain strength.

An embodiment of this disclosure relates to an electric dust collector that includes: a casing that forms a passage of airflow and has a conductive body; a charged electrode arranged in the passage and charging a substance such as dust in the airflow by discharging electricity to the airflow; and the above-described filter for the electric dust collector in which the conductive filter frame is connected to the conductive body.

When the discharging is performed from the charged electrode, substances such as dust in the airflow are charged to a specified polarity. Dust particles larger than the mesh size of the mesh sheet are entangled and caught by the mesh sheet forming the filter. Fine particles of dust or the like smaller than the mesh size are adhered to the conductive material of the filter mesh sheet. In this manner, not only the dust particles larger than the mesh size, but also the fine particles smaller than the mesh size are caught by the filter mesh sheet.

The mesh sheet includes resin fibers that are combined in a grid pattern. Thus, the pressure loss of the mesh sheet of the filter is significantly suppressed. The filter can effectively catch the fine particles while avoiding the pressure loss. Thus, the cleanliness degree of the airflow can be increased without increasing the air flow resistance of the airflow.

At this time, when the fine particles are adhered to the conductive material of the filter mesh sheet, the electric charges are moved between the fine particles and the conductive material of the filter mesh sheet. Accordingly, a state where the fine particles are charged is eliminated. Thus, the filter mesh sheet is prevented from having the potential of the same polarity as the charged electrode. Even when the adhesion of the fine particles is increased, new fine particles can be reliably adhered to the filter mesh sheet. If a passage for movement of the electric charges to the filter mesh sheet is not provided, the potential of the same polarity as the charged electrode is generated on the filter mesh sheet along with an increase in the adhesive force of the electric charges. For this reason, the adhesion of the fine particles is inhibited according to a repelling force generated between the same polarities.

The plural mesh sheets may be arranged in series in an air flowing direction of the airflow. The airflow sequentially passes through the plural mesh sheets that are arranged in the air flowing direction of the airflow.

Compared to a case where one mesh sheet is provided, the charged fine particles are more likely to be adhered to the conductive material. Meanwhile, the air flow resistance of the mesh sheet is small. Thus, the cleanliness degree of the airflow can be increased without increasing the air flow resistance of the airflow.

Here, the filter frame and the filter mesh sheet form the filter. The filter frame and the filter mesh sheet are integrated with each other by insert molding. The filter can be attached to or detached from the casing. The filter frame is formed to have the higher strength than the filter mesh sheet. Thus, the damage of the filter mesh sheet can be prevented by electrically connecting the filter mesh sheet to the ground potential via the filter frame.

The filter mesh sheet can have the conductive film as the conductive material at least on the second surface on the opposite side of the first surface that receives the airflow. At this time, the filter frame may be in contact with a surface of the conductive film. The dust particles larger than the mesh size of the filter mesh sheet are entangled by the first surface of the filter mesh sheet. The fine particles smaller than the mesh size are adhered to the second surface of the filter mesh sheet. The filter frame is fixed to the second surface of the filter mesh sheet. Accordingly, the flatness of the first surface of the filter mesh sheet is secured. Thus, the dust can be reliably scraped off from the first surface by cleaning the first surface of the filter mesh sheet with use of the brush with the short bristles. On the second surface of the filter mesh sheet, the adhesive force of the fine particles is weakened because the electric charges are transferred to the ground. Thus, even when the filter frame causes unevenness of the second surface, the second surface can be cleaned relatively easily.

The electric dust collector can further include a repelling electrode. The repelling electrode is arranged along the transverse plane on a downstream side of the filter mesh sheet in the air flowing direction of the airflow. In addition, the repelling electrode is formed of a mesh sheet and has a conductive material for forming an electric barrier with the same polarity as the charged electrode at least on a surface that faces the conductive material of the filter mesh sheet. The airflow passes through the filter mesh sheet and the mesh sheet of the repelling electrode (hereinafter referred to as a "repelling mesh sheet"). The charged fine particles are carried in the airflow and pass through the mesh of the filter mesh sheet. Then, the charged fine particles collide with the electric barrier. The charged fine particles and the electric barrier have the same polarity. Thus, the charged fine particles are bounced off the electric barrier. Accordingly, an advancing direction of the fine particles is changed to an opposite direction. The charged fine particles are easily adhered to the conductive material of the filter mesh sheet. In such a manner, the fine particles of the fine dust or the like are caught by the filter mesh sheet.

As described above, according to the electric dust collector according to the embodiment of this disclosure, the cleanliness degree of the airflow can be increased without increasing the air flow resistance of the airflow. In this electric dust collector, the conductive material of the mesh sheet forming the filter and the conductive body of the casing can be electrically connected easily to each other.

The electric dust collector as described above can be used by being incorporated in an air conditioner. An air cleaning function can be provided with use of such an air conditioner. In addition, the electric dust collector may be used by being incorporated in an air cleaner or a ventilator. Such an electric dust collector may be used for construction of a clean room.

An embodiment of this disclosure relates to an air conditioner that includes: a casing for forming a passage of airflow; a charged electrode arranged in the passage and charging a substance in the airflow by discharging electricity to the airflow; a filter arranged along a transverse plane traversing the passage and formed of a mesh sheet having a conductive material at least partially on a surface; and a ground terminal formed in the filter and connecting a ground to the conductive material.

In the air conditioner, of a front and rear pair of the mesh sheets, the mesh sheet on a upstream side is formed with the conductive material at least on a second surface on an opposite side of a first surface that receives the airflow. In addition, the mesh sheet on a downstream side may be formed with an electric barrier having the same polarity as the charged electrode by applying voltage to the conductive material that faces the conductive material of the mesh sheet on the upstream side. When the discharging is performed from the charged electrode, fine particles of dust or the like in the airflow are charged to a specified polarity. The airflow sequentially passes through the front and rear pair of the mesh sheets. Even when being carried in the airflow and passing through a mesh of the mesh sheet on the upstream side, the charged fine particles collide with the electric barrier. The charged fine particles and the electric barrier have the same polarity. Thus, the charged fine particles are bounced off the electric barrier. In such a manner, an advancing speed of the fine particles is lowered, and an advancing direction of the fine particles is changed to an opposite direction. The charged fine particles are easily adhered to the conductive material of the mesh sheet. Accordingly, the air conditioner can effectively catch the fine particles while avoiding the pressure loss.

The conductive material of the mesh sheet on the upstream side only needs to face the conductive material of the mesh sheet on the downstream side at an equally spaced interval. Thus, uneven distribution of the potential in the electric barrier can be suppressed as much as possible. As a result, the fine particles can be thoroughly adhered to a dust collecting electrode. Since the fine particles are not unevenly distributed on the filter, the fine particles can be efficiently caught in an entire portion of the mesh sheet on the upstream side that faces the mesh sheet on the downstream side.

The mesh sheet on the upstream side and the mesh sheet on the downstream side may be formed of an insulating material. At this time, the insulating material only needs to be arranged in the first surface of the mesh sheet on the upstream side, and the insulating body only needs to be arranged in a surface on an opposite side of a surface of the mesh sheet on the downstream side that faces the mesh sheet on the upstream side. When the mesh sheets are sequentially arranged along an air flowing direction of the airflow, the conductive material on the mesh sheet on the downstream side faces the conductive material on the mesh sheet on the upstream side. Accordingly, both of the conductive materials of the mesh sheets are arranged between both of the insulating materials. Thus, it is possible to prevent a user from directly touching the conductive material, to which high voltage is supplied, from the outside.

In the air conditioner, the mesh sheets may be continuously and annularly coupled to each other via the insulating materials. The mesh sheets can continuously move on a single orbit.

As described above, according to the air conditioner according to the embodiment of this disclosure, the cleanliness degree of the airflow can be increased without increasing the air flow resistance of the airflow.

Embodiments of this disclosure will be described below with reference to the accompanying drawings.

### (1) Configuration of Air Conditioner

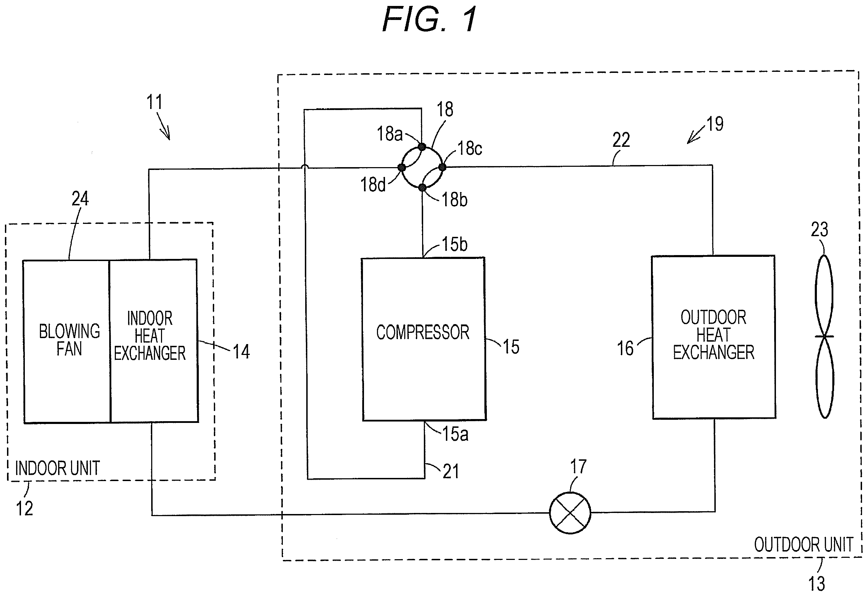

Fig. 1 schematically illustrates a configuration of an air conditioner 11 according to an embodiment of this disclosure. The air conditioner 11 includes an indoor unit 12 and an outdoor unit 13. The indoor unit 12 is mounted in an indoor space of a building, for example. The indoor unit 12 may be mounted in other space that corresponds to the indoor space. The indoor unit 12 includes an indoor heat exchanger 14. The outdoor unit 13 includes a compressor 15, an outdoor heat exchanger 16, an expansion valve 17, and a four-way valve 18. The indoor heat exchanger 14, the compressor 15, the outdoor heat exchanger 16, the expansion valve 17, and the four-way valve 18 form a refrigeration circuit 19.

The refrigeration circuit 19 includes a first circulation passage 21. The first circulation passage 21 connects a first opening 18a and a second opening 18b of the four-way valve 18 to each other. The first circulation passage 21 is provided with the compressor 15. An intake pipe 15a of the compressor 15 is connected to the first opening 18a of the four-way valve 18 via a refrigerant pipe. A gas refrigerant is supplied from the first opening 18a to the intake pipe 15a of the compressor 15. The compressor 15 compresses the low-pressure gas refrigerant to a specified pressure. A discharge pipe 15b of the compressor 15 is connected to the second opening 18b of the four-way valve 18 via the refrigerant pipe. The gas refrigerant is supplied from the discharge pipe 15b of the compressor 15 to the second opening 18b of the four-way valve 18. The refrigerant pipe may be a copper pipe, for example.

The refrigeration circuit 19 further includes a second circulation passage 22. The second circulation passage 22 connects a third opening 18c and a fourth opening 18d of the four-way valve 18 to each other. The outdoor heat exchanger 16, the expansion valve 17, and the indoor heat exchanger 14 are sequentially incorporated in the second circulation passage 22 in this order from the third opening 18c side. The outdoor heat exchanger 16 exchanges thermal energy between the refrigerant that flows therethrough and the surrounding air. The indoor heat exchanger 14 exchanges the thermal energy between the refrigerant that flows therethrough and the surrounding air. The second circulation passage 22 may be formed of a refrigerant pipe such as a copper pipe, for example.

The outdoor unit 13 includes a blowing fan 23. The blowing fan 23 blows air to the outdoor heat exchanger 16. For example, the blowing fan 23 generates airflow according to rotation of an impeller, for example. The airflow passes through the outdoor heat exchanger 16. A flow rate of the airflow that passes therethrough is adjusted according to a rotational speed of the impeller.

The indoor unit 12 includes a blowing fan 24. The blowing fan 24 blows air to the indoor heat exchanger 14. The blowing fan 24 generates airflow according to rotation of an impeller. By virtue of the blowing fan 24, indoor air is suctioned into the indoor unit 12. The indoor air exchanges heat with the refrigerant flowing through the indoor heat exchanger 14. The cold or warm airflow that has exchanged the heat is blown out of the indoor unit 12. A flow rate of the airflow that passes therethrough is adjusted according to a rotational speed of the impeller.

When a cooling operation is performed in the refrigeration circuit 19, the four-way valve 18 connects the second opening 18b and the third opening 18c to each other. At this time, the four-way valve 18 also connects the first opening 18a and the fourth opening 18d to each other. Accordingly, a refrigerant of high temperature and high pressure is supplied from the discharge pipe 15b of the compressor 15 to the outdoor heat exchanger 16. The refrigerant sequentially flows through the outdoor heat exchanger 16, the expansion valve 17, and the indoor heat exchanger 14. In the outdoor heat exchanger 16, the heat is dissipated from the refrigerant to ambient air. The pressure of the refrigerant is reduced to a low pressure in the expansion valve 17. The refrigerant, the pressure of which is reduced, absorbs the heat from the surrounding air in the indoor heat exchanger 14. In this manner, cold air is generated. The cold air is blown out to the indoor space by virtue of the blowing fan 24.

When a warming operation is performed in the refrigeration circuit 19, the four-way valve 18 connects the second opening 18b and the fourth opening 18d to each other. At this time, the four-way valve 18 also connects the first opening 18a and the third opening 18c to each other. A refrigerant of high temperature and high pressure is supplied from the compressor 15 to the indoor heat exchanger 14. The refrigerant sequentially flows through the indoor heat exchanger 14, the expansion valve 17, and the outdoor heat exchanger 16. In the indoor heat exchanger 14, the heat is dissipated from the refrigerant to the surrounding air. In this manner, warm air is generated. The warm air is blown out to the indoor space by virtue of the blowing fan 24. The pressure of the refrigerant is reduced to a low pressure in the expansion valve 17. The refrigerant, the pressure of which is reduced, absorbs the heat from the surrounding air in the outdoor heat exchanger 16. Then, the refrigerant returns to the compressor 15.

### (2) Configuration of Indoor Unit

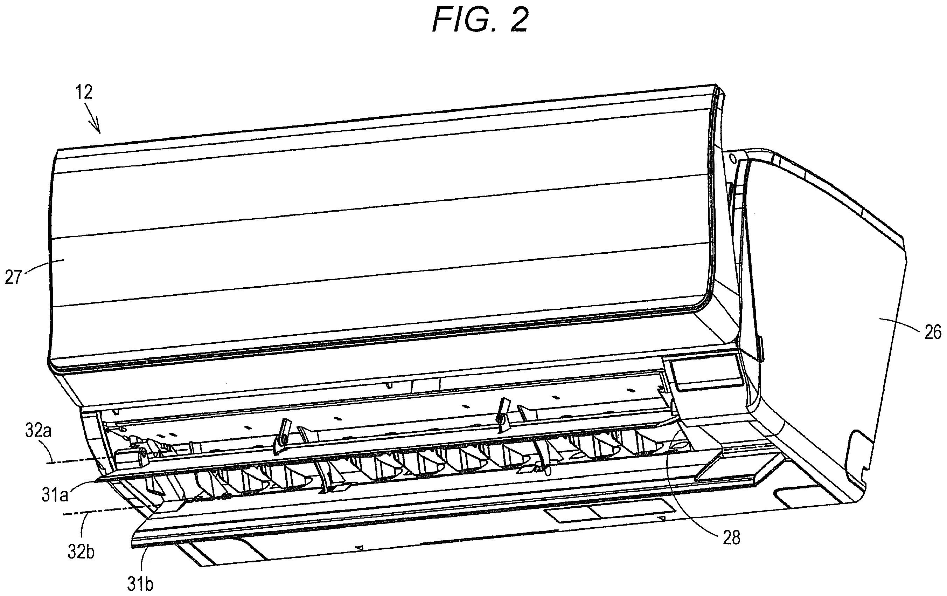

Fig. 2 schematically illustrates an external appearance of the indoor unit 12 according to the first embodiment. A body (a casing) 26 of the indoor unit 12 is covered with an outer panel 27. A blowout opening 28 is formed on a lower surface of the body 26. The blowout opening 28 is opened to a room. The body 26 can be fixed to a wall surface of the room, for example. The blowout opening 28 blows out the cold or warm airflow that is generated in the indoor heat exchanger 14.

A front and rear pair of vertical wind direction plates 31a and 31b is arranged on the blowout opening 28. The vertical wind direction plates 31a and 31b can respectively turn about horizontal axes 32a and 32b. The vertical wind direction plates 31a and 31b can open or close the blowout opening 28 by turning. A direction of the blown-out airflow can be changed in accordance with angles of the vertical wind direction plates 31a and 31b.

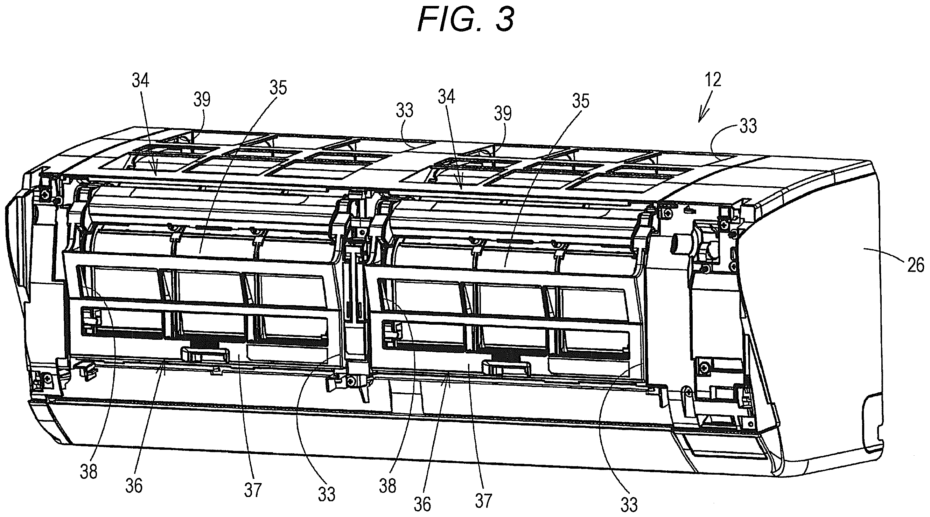

As illustrated in Fig. 3, a suction opening 33 is formed in the body 26. The suction opening 33 is opened on a front surface and an upper surface of the body 26. The outer panel 27 can cover the suction opening 33 on the front surface of the body 26. The air that flows into the indoor heat exchanger 14 is suctioned from the suction opening 33.

In the suction opening 33, plural air filter assemblies 34, each of which has the same shape, are arranged in a longitudinal direction of the suction opening 33. The air filter assembly 34 includes an air filter 35 and a holding part 36. The air filter 35 is held by the holding part 36. The holding part 36 has a frame body 37. The holding part 36 is fixed at the frame body 37 to the body 26. When the holding part 36 is set in the body 26, the air filter 35 is arranged for the entire surface of the suction opening 33.

The frame body 37 of the holding part 36 is provided with a front filter rail 38 that holds a later-described frame part of the air filter 35. The body 26 is provided with a rear filter rail 39 corresponding to the front filter rail 38. The filter rails 38 and 39 form a continued passage. The filter rails 38 and 39 are provided along a perpendicular surface that is orthogonal to the horizontal axes 32a and 32b so as to slidably hold both of right and left ends of the air filter 35. The air filter 35 moves along the filter rails 38 and 39.

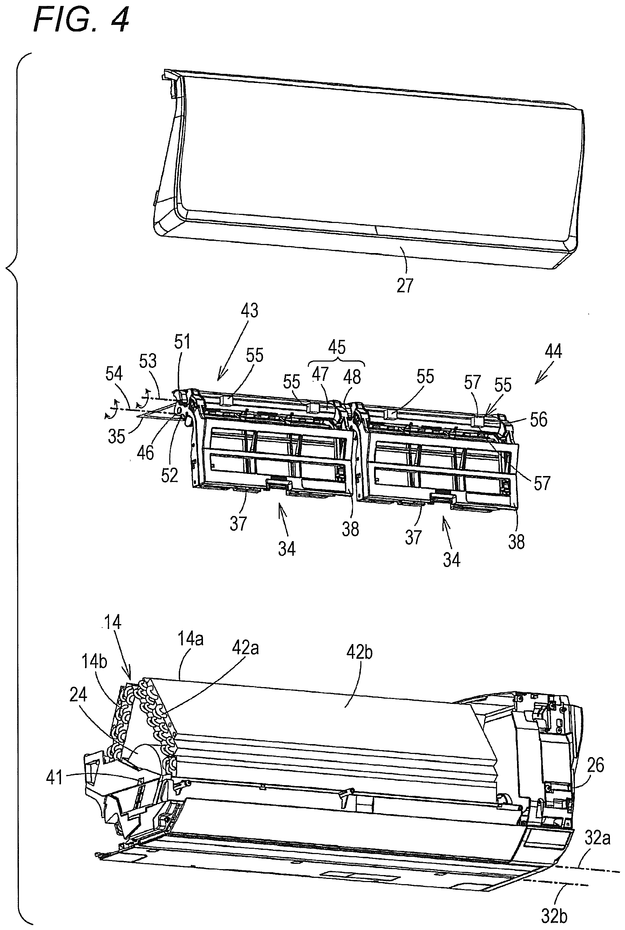

As illustrated in Fig. 4, the blowing fan 24 is rotatably supported in the body 26. A cross flow fan is used for the blowing fan 24, for example. The blowing fan 24 can rotate about a rotational shaft 41 that is parallel to the horizontal axes 32a and 32b. The rotational shaft 41 of the blowing fan 24 extends in a horizontal direction during mounting of the body 26. In such a manner, the blowing fan 24 is arranged parallel to the blowout opening 28. The drive power around the rotational shaft 41 is transmitted to the blowing fan 24 from a driving source (not shown). The driving source is supported by the body 26. The airflow passes through the indoor heat exchanger 14 in accordance with the rotation of the blowing fan 24. As a result, the cold or warm airflow is generated. The cold or warm airflow is blown out of the blowout opening 28.

The indoor heat exchanger 14 includes a front-side body 14a and a rear-side body 14b. The front-side body 14a covers the blowing fan 24 from the front side of the blowing fan 24. The rear-side body 14b covers the blowing fan 24 from the rear side of the blowing fan 24. The front-side body 14a and the rear-side body 14b are coupled to each other at upper ends thereof. The front-side body 14a and the rear-side body 14b have a refrigerant pipe 42a. The refrigerant pipe 42a is arranged back and forth in the horizontal direction. More specifically, the refrigerant pipe 42a extends parallel to the horizontal axes 32a and 32b, is folded back at right and left ends of the body 26 in a front view, extends again parallel to the horizontal axes 32a and 32b, and is folded back again at the right and left ends of the body 26 in the front view. The refrigerant pipe 42a further repeats such extension and folding. The refrigerant pipe 42a constitutes a part of the second circulation passage 22. Plural heat dissipation fins 42b are joined to the refrigerant pipe 42a. The heat dissipation fins 42b extend parallel to each other while being orthogonal to the horizontal axes 32a and 32b. The refrigerant pipe 42a and the heat dissipation fins 42b may be molded from a metallic material such as copper and aluminum. The heat exchange is effected between the refrigerant and the air through the refrigerant pipe 42a and the heat dissipation fins 42b.

As illustrated in Fig. 4, the air filter assembly 34 includes a filter cleaning unit 43 and an electric dust collecting unit (an electric dust collector) 44. The filter cleaning unit 43 includes an upper dust box 45 and a lower dust box 46. The upper dust box 45 and the lower dust box 46 have the frame body 37 of the holding part 36. The upper dust box 45 is arranged on a front surface side of the air filter 35. The upper dust box 45 has a cover 47. The cover 47 is provided to cover a dust storage part 49 of a box body 48 in an openable and closable manner. The lower dust box 46 is arranged on a rear surface side of the air filter 35. The upper dust box 45 and the lower dust box 46 are arranged in the horizontal direction with respect to the air filter 35. During cleaning of the air filter 35, most of dust on the front surface of the air filter 35 is collected in the box body 48 of the upper dust box 45. Dust on the rear surface of the air filter 35 is collected in the lower dust box 46.

The filter cleaning unit 43 includes a first driven gear 51 and a second driven gear 52. The first driven gear 51 is attached to the upper dust box 45. The first driven gear 51 rotates about a horizontal shaft 53. The first driven gear 51 rotates a later-described cleaning brush in the upper dust box 45. The teeth of the first driven gear 51 are at least partially exposed from an outer surface of the upper dust box 45. Similarly, the second driven gear 52 is attached to the lower dust box 46. The second driven gear 52 rotates about a horizontal shaft 54. The second driven gear 52 is provided on both end sides of the lower dust box 46 and drives the air filter 35 as described below. The teeth of the second driven gear 52 are at least partially exposed from an outer surface of the lower dust box 46. When the air filter assembly 34 is set in the body 26, the first driven gear 51 meshes with a first drive gear (not shown) that is mounted in the body 26. Similarly, the second driven gear 52 meshes with a second drive gear (not shown) that is mounted in the body 26. The driving source (not shown), such as an electric motor, is coupled to each of the first drive gear and the second drive gear. The first driven gear 51 and the second driven gear 52 rotate independently from each other in accordance with the drive power supplied from the respective driving sources.

The electric dust collecting unit 44 includes an ionizer 55, a later-described charged electrode, and a later-described dust collecting electrode. The ionizer 55 is fixed to the outer surface of the upper dust box 45. A casing 56 of the ionizer 55 may be integrated with the cover 47 of the upper dust box 45. An opening 57 is formed on upper and lower sides of the casing 56 of the ionizer 55. Ions and ozone are dissipated from the opening 57. The dissipated ions and ozone are dispersed in a space between the outer panel 27 and the air filter 35. The ionizer 55 is electrically connected to a control unit, which is not shown, in the body 26 by wiring (not shown). The wiring of the ionizer 55 has a detachable electric contact. Upon attachment or detachment of the air filter assembly 34, the wiring is coupled or decoupled. The operation power is supplied to the ionizer 55 through the wiring.

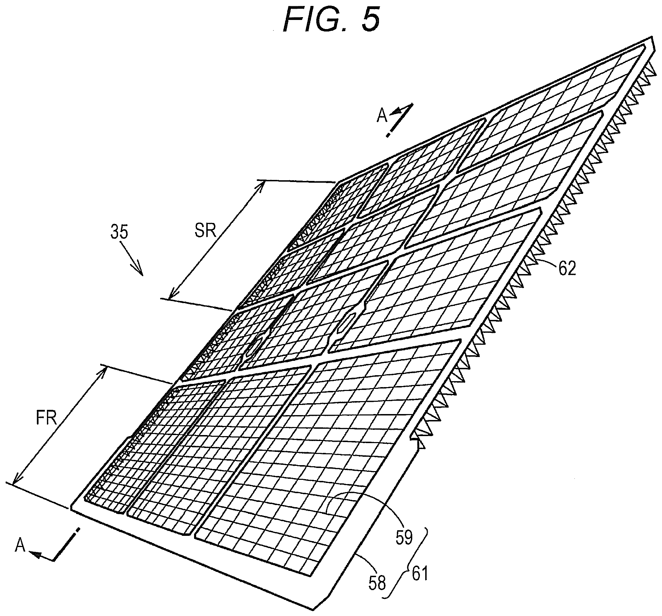

As illustrated in Fig. 5, the air filter 35 includes a frame (filter frame) 58 and a mesh sheet 59 as a filter mesh sheet. The mesh sheet 59 is formed from polyethylene terephthalate fibers (resin fibers), for example. The mesh sheet 59 is provided by combining plural warp fibers and plural weft fibers in a grid pattern. A mesh of the mesh sheet 59 is arranged to cross the airflow that flows through an air flow passage, so as to partition the air flow passage. The warp fibers and the weft fibers may be threads made of twisted fibers.

The mesh sheet 59 is supported by the frame 58. The frame 58 continues along a contour of the mesh sheet 59. The frame 58 has a function of keeping the shape of the mesh sheet 59. Each warp fiber and each weft fiber are coupled to the frame 58 at both ends. The frame 58 is formed of a conductive resin material. A rack 62 is formed in the frame 58 on the rear surface side of the air filter 35. The rack 62 extends linearly along the perpendicular surface that is orthogonal to the horizontal axes 32a and 32b.

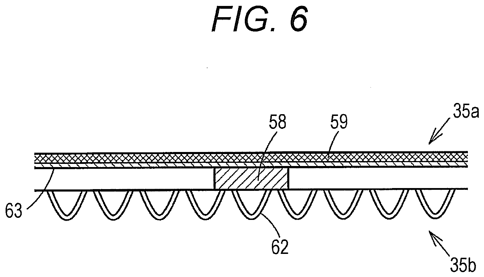

As illustrated in Fig. 6, a coating film of a conductive material (a conductive film) 63 is formed on a second surface 35b (the rear surface) that is provided on a downstream side of the mesh sheet 59 in an air advancing direction of the airflow. A metallic material such as aluminum can be used as the conductive material. For example, a sputtering method can be used to form the coating film 63. The coating film 63 is stacked on each warp fiber and each weft fiber. For each warp fiber and each weft fiber, the coating film 63 is connected to the frame 58. The air flow passage, which is partitioned by the mesh of the mesh sheet 59, is secured as is. An insulating body of the mesh sheet 59 is maintained on an entire surface of a first surface 35a (the front surface) on the room side of the air filter 35. The frame 58 is fixed to the coating film 63. Upon molding of the frame 58, the mesh sheet 59 with the coating film 63 is mounted in a mold. A molten resin is poured into the mold, and the frame 58 is integrated with the mesh sheet 59. In such a manner, the coating film 63 is connected to the frame 58.

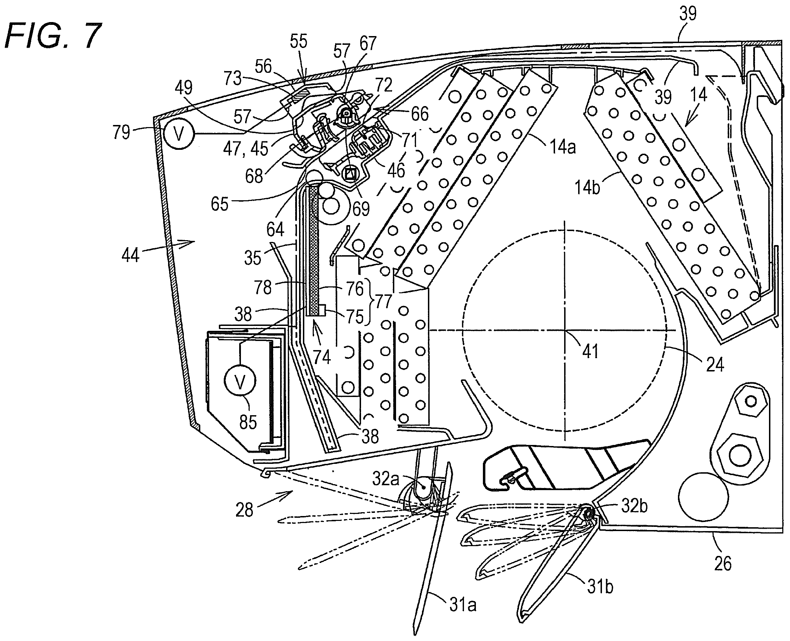

As illustrated in Fig. 7, the filter cleaning unit 43 includes a pinion 64. The pinion 64 is rotatably supported by the lower dust box 46, for example. For example, the outer periphery of the pinion 64 faces a curved surface of a pressing plate 65 that is formed in the frame body 37 with a predetermined distance interposed therebetween. The curved surface is defined by a generatrix that is parallel to a rotational axis of the pinion 64. Once the air filter 35 is mounted in the holding part 36, the frame 58 and the rack 62 are sandwiched between the outer periphery of the pinion 64 and the curved surface of the pressing plate 65. In such a manner, the rack 62 meshes with the pinion 64. The pressing plate 65 prevents separation of the rack 62 from the pinion 64. The pinion 64 and the pressing plate 65 guide the movement of the air filter 35.

The pinion 64 is coupled to the second driven gear 52. The rotation of the second driven gear 52 is transmitted to the pinion 64. The rotation of the pinion 64 causes the rack 62 to move in a tangential direction of the pinion 64. Accordingly, the relative movement of the air filter 35 relative to the upper dust box 45 and the lower dust box 46 along the perpendicular surface that is orthogonal to the horizontal axes 32a and 32b is performed in accordance with the rotation of the second driven gear 52. Here, the pinion (a conductive body) 64 and the second driven gear 52 are each formed of a conductive material such as a metal. Here, the second driven gear 52 is connected to a ground (a conductive body) provided in the frame body 37, to which the filter cleaning unit 43 is attached. The potential of the frame 58 is dropped to the ground through the pinion 64 and the second driven gear 52. The body 26 may be formed with an electric contact (not shown) that is in contact with a shaft of the second drive gear. Due to this electric contact, the second driven gear 52 can be connected to the ground via the second drive gear that meshes with the gear 52. The pinion 64 functions as the conductive body of the ground potential.

The filter cleaning unit 43 includes a cleaning brush 66 arranged to be associated with the air filter 35. The cleaning brush 66 is housed in the upper dust box 45. The cleaning brush 66 includes a brush pedestal 67. The brush pedestal 67 can rotate about a horizontal shaft 68 by the drive power from the first driven gear 51. Brush bristles 69 are arranged on a cylindrical surface of the brush pedestal 67 over a specified center angle range. A range where the brush bristles 69 are implanted has a width that spreads to traverse the air filter 35 in an axial direction of the brush pedestal 67. The brush bristles 69 are brought into contact with the air filter 35 at a specified rotational position. The cleaning brush 66 separates the brush bristles 69 from the air filter 35 at other positions except the rotational position. When the air filter 35 moves in a direction along the perpendicular surface that is orthogonal to the horizontal axes 32a and 32b in a state that the brush bristles 69 are in contact with the air filter 35, the dust adhered to the front surface of the air filter 35 can be entangled and caught by the brush bristles 69.

The filter cleaning unit 43 includes a brush receiver 71. The brush receiver 71 is housed in the lower dust box 46. The brush receiver 71 has a receiving surface 72. The receiving surface 72 faces the cleaning brush 66. When the brush bristles 69 come in contact with the air filter 35, the receiving surface 72 holds the air filter 35 between the brush bristles 69 and the receiving surface 72. In addition, brush bristles may be implanted on the receiving surface 72.

The ionizer 55 of the electric dust collecting unit 44 has a charged electrode 73. The charged electrode 73 receives a supply of high voltage from a high-voltage supply 79 for the charged electrode of the body 26 and discharges electricity to the air. Ions and the ozone are generated by the discharging. The thus-generated ions and ozone are dispersed from the opening 57 of the ionizer 55.

The electric dust collecting unit 44 further includes a repelling filter (a repelling electrode) 74. The repelling filter 74 may have the same structure as the air filter 35. More specifically, the repelling filter 74 includes a frame 75 and a mesh sheet 76 as a repelling mesh sheet. The mesh sheet 76 is formed from polyethylene terephthalate fibers (resin fibers), for example. The mesh sheet 76 is provided by combining plural warp fibers and plural weft fibers in a grid pattern. A mesh of the mesh sheet 76 is arranged to cross the airflow that flows through an air flow passage. The mesh of the mesh sheet 76 partitions the air flow passage.

The mesh sheet 76 is supported by the frame 75. The frame 75 continues along a contour of the mesh sheet 76, for example. The frame 75 has a function of keeping the shape of the mesh sheet 76. Each warp fiber and each weft fiber are coupled to the frame 75 at both ends. A surface on the dust collecting electrode side (here, the air filter 35 side) of the mesh sheet 76 is covered with a coating film 78 of a conductive material. A metallic material such as aluminum can be used for the conductive material. For example, a sputtering method can be used to form the coating film 78. The air flow passage, which is partitioned in the grid pattern, is secured as is by the mesh sheet 76. An insulating body of the mesh sheet 76 is maintained in an entire surface on the indoor heat exchanger 14 side of the repelling filter 74.

The repelling filter 74 may be fixed to the indoor heat exchanger 14 side of a filter rail 38 that is integrated with the lower dust box 46. A space is formed between the coating film 78 on the front surface and the coating film 63 of the air filter 35. In other words, a distance is secured between the coating film 78 and the coating film 63. Here, the coating film 78 faces the coating film 63 at an equally spaced interval. In such a manner, the electric dust collecting unit 44 uses the air filter 35 as the dust collecting electrode.

The coating film 78 is connected to a high-voltage source 85 for a repelling electrode of the body 26. Wiring for connecting the repelling filter 74 and the high-voltage source 85 for the repelling electrode has a detachable electric contact. Upon the attachment and detachment of the air filter assembly 34, the wiring is coupled or decoupled. The high voltage is supplied to the coating film 78 through the wiring. Here, the voltage having the same polarity as that of the charged electrode 73 is supplied to the coating film 78 of the repelling filter 74. Accordingly, upon receiving the supply of the high voltage, the repelling filter 74 forms an electric barrier having the same polarity as that of the charged electrode 73 along the coating film 78 on the front surface.

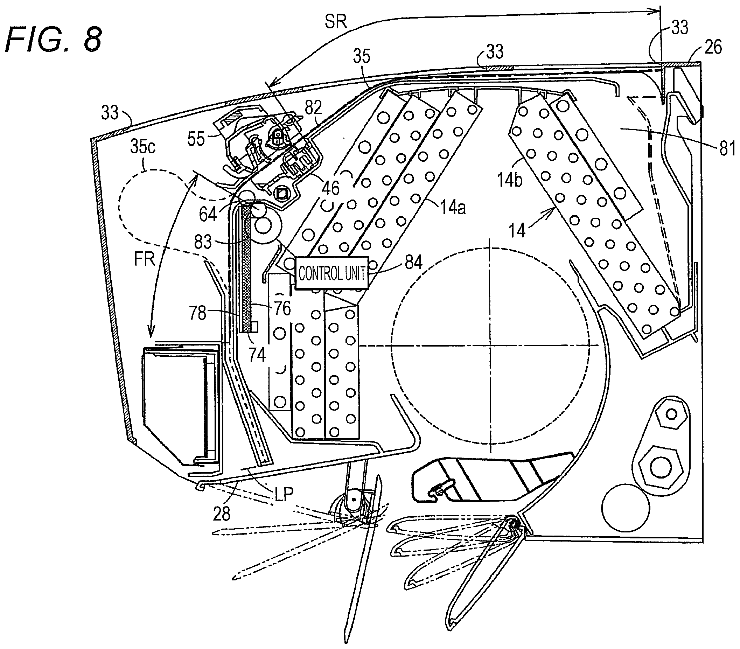

As illustrated in Fig. 8, a passage 81 for airflow is formed from the suction opening 33 toward the blowout opening 28 in the body 26. The indoor heat exchanger 14 is arranged in the passage 81. On an upstream side of the indoor heat exchanger 14, the air filter 35 is arranged along a transverse plane 82 that traverses the passage 81 (from a rear end side of a later described SR to a lower end side of a later-described FR). The frame 58 is supported by the body 26 along the transverse plane 82 and surrounds the passage 81. The mesh sheet 59 is coupled to the frame 58 and arranged along the transverse plane 82. The ionizer 55 is arranged on an upstream side of the air filter 35.

The mesh sheet 59 of the air filter 35 has the first region FR and the second region SR. When the air filter 35 is located at a reference position, an upper end of the air filter 35 is in contact with an upper end of the transverse plane 82. At this time, the mesh sheet 59 of the air filter 35 blocks the passage 81 along the transverse plane 82. The first region FR of the mesh sheet 59 blocks the passage 81 along the transverse plane 82 on a lower side of the upper dust box 45 and the lower dust box 46. The second region SR of the mesh sheet 59 blocks the passage 81 along the transverse plane 82 on an upper side of the upper dust box 45 and the lower dust box 46. In such a manner, at the reference position of the air filter 35, the cleaning brush 66 is arranged between the first region FR and the second region SR.

The repelling filter 74 is arranged downstream of the air filter 35. The mesh sheet 76 of the repelling filter 74 blocks the passage 81 for airflow on the lower side of the upper dust box 45 and the lower dust box 46. The repelling filter 74 is not arranged on the upper side of the upper dust box 45 and the lower dust box 46. Accordingly, the mesh sheet 76 of the repelling filter 74 only faces the first region FR of the air filter 35 at the reference position.

As described above, the driving source, such as an electric motor 83, is coupled to the pinion 64 through the second driven gear 52 or another drive mechanism. A control unit 84 is connected to the electric motor 83. The control unit 84 controls an operation of the electric motor 83. In accordance with the operation of the electric motor 83, the air filter 35 can move along the transverse plane 82. The control unit 84 may be provided by an arithmetic processor such as a microprocessor unit (MPU).

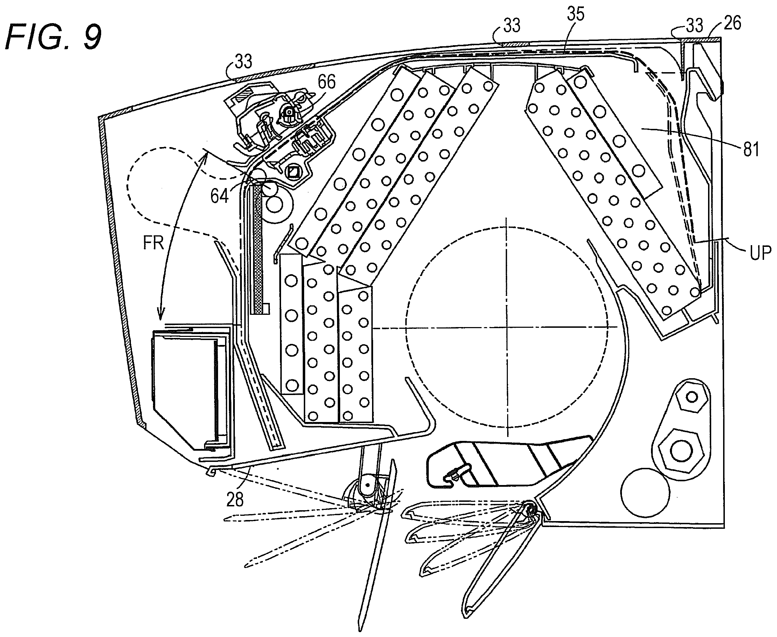

When the air filter 35 is located at the upper limit position as illustrated in Fig. 9, the lower end of the air filter 35 is ascended to a position of the pinion 64. The upper end of the air filter 35 is guided along an inner wall surface of the passage 81 and reaches a first prescribed position UP. At this time, the mesh sheet 59 of the air filter 35 is retracted from the first region FR along the transverse plane 82. While the air filter 35 moves between the reference position and the upper limit position, the cleaning brush 66 comes in contact with the first region FR of the air filter 35. Accordingly, the first region FR of the mesh sheet 59 is cleaned by the cleaning brush 66.

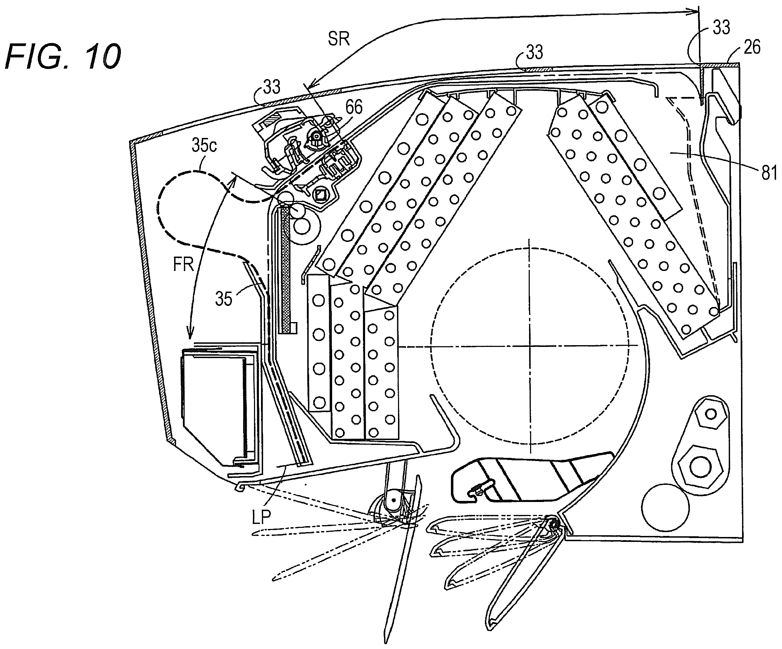

When the air filter 35 is located at the lower limit position as illustrated in Fig. 10, the upper end of the air filter 35 is descended to a position of the cleaning brush 66. The lower end of the air filter 35 is descended to a second prescribed position LP on an extension of the transverse plane 82. A part 35c of the air filter 35 is significantly curved to the outer side in the first region FR. At this time, the mesh sheet 59 of the air filter 35 is retracted from the second region SR along the transverse plane 82. While the air filter 35 moves between the reference position and the lower limit position, the cleaning brush 66 comes in contact with the second region SR of the air filter 35. Accordingly, the second region SR of the mesh sheet 59 is cleaned.

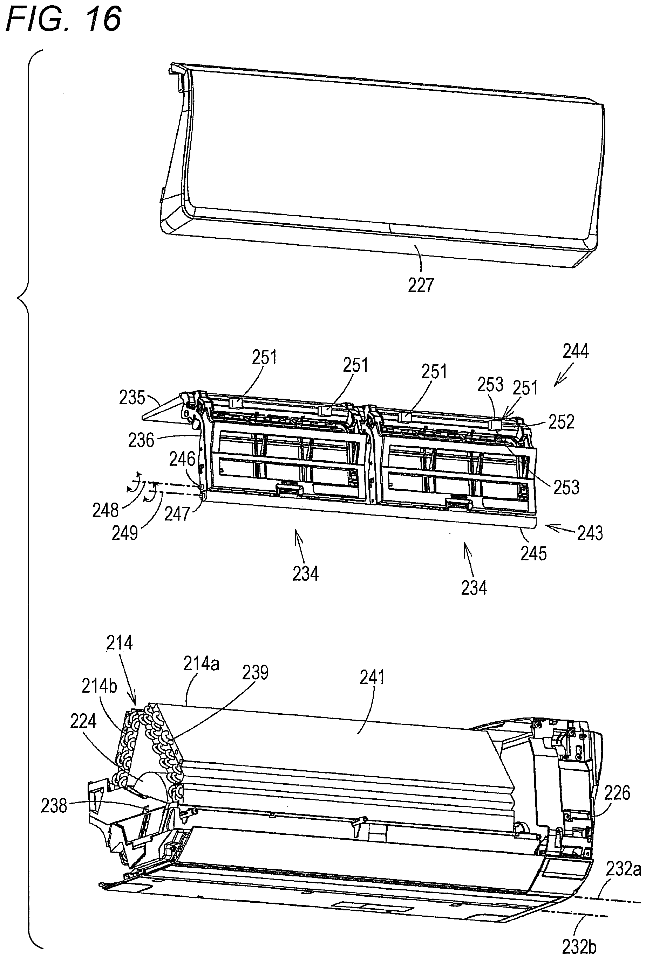

In addition, as illustrated in Fig. 16, a filter cleaning unit 243 and an electric dust collecting unit 244 may be associated with an air filter assembly 234. The filter cleaning unit 243 includes a dust box 245. The dust box 245 is supported by a body 226, for example. When the dust box 245 and the air filter assembly 234 are set in the body 226, an air filter 235 faces the dust box 245 at a lower end of the air filter assembly 234. The dust box 245 is arranged in the horizontal direction with respect to the air filter 235. During cleaning of the air filter 235, dust in the air filter 235 is collected in the dust box 245.

The filter cleaning unit 243 may include a first driven gear 246 and a second driven gear 247. The first driven gear 246 is attached to a holding part 236 of the air filter assembly 234. The first driven gear 246 rotates about a horizontal shaft 248. The first driven gear 246 is arranged on an outer side of the holding part 236. When the air filter assembly 234 is set in the body 226, the first driven gear 246 meshes with a first drive gear (not shown) that is mounted in the body 226. The driving source (not shown), such as an electric motor, is coupled to the first drive gear. The first driven gear 246 rotates in accordance with the drive power that is supplied from the driving source.

The second driven gear 247 is attached to the dust box 245. The second driven gear 247 rotates about a horizontal shaft 249. The teeth of the second driven gear 247 are at least partially exposed from an outer surface of the dust box 245. The second driven gear 247 meshes with a second drive gear (not shown) that is mounted in the body 226. The driving source (not shown), such as an electric motor, is coupled to the second drive gear. The second driven gear 247 rotates in accordance with the drive power that is supplied from the driving source.

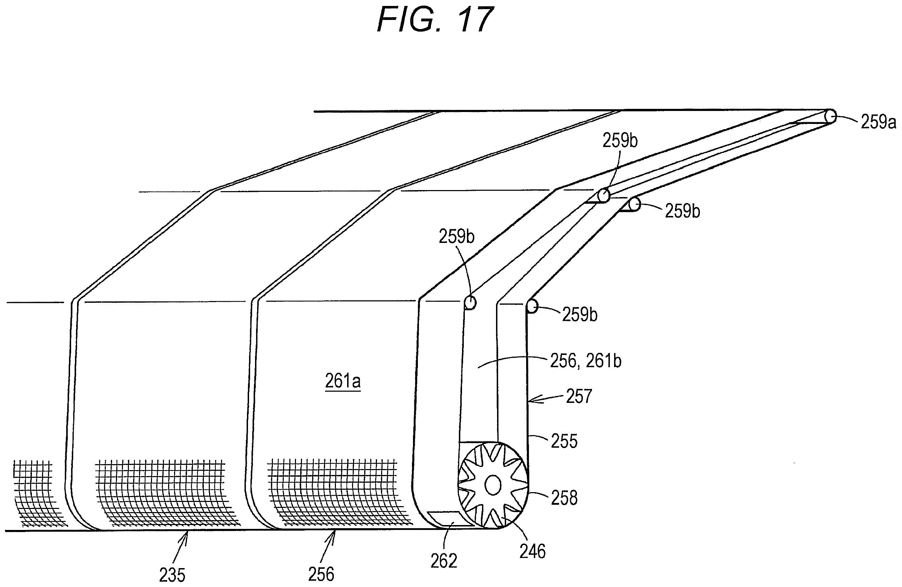

As illustrated in Fig. 17, the air filter 235 may include a belt body 255 and a mesh sheet 256. The mesh sheet 256 is provided by combining polyethylene terephthalate fibers (resin fibers) in a grid pattern, for example. The mesh sheet 256 is supported by the belt body 255. The belt body 255 holds both of right and left sides of the mesh sheet 256. The belt body 255 and the mesh sheet 256 constitute an insulating body 257. A mesh of the mesh sheet 256 is provided to cross the airflow, and thereby defines an air flow passage.

The belt body 255 and the mesh sheet 256 have flexibility. The belt body 255 and the mesh sheet 256 are each formed in an annular shape. The belt body 255 and the mesh sheet 256 are wound around a roller shaft 258 and plural thin shafts 259a and 259b. The roller shaft 258 and the thin shafts 259a and 259b are supported by a frame body 237 of the holding part 236. By the actions of the roller shaft 258 and the thin shafts 259a and 259b, the shape of the mesh sheet 256 is kept. The mesh sheet 256 is double-folded at a position between the roller shaft 258 and the thin shaft 259a at an uppermost end. Accordingly, a front and rear pair of mesh sheets 261a and 261b is provided. The belt body 255 is coupled to a cylindrical surface of the roller shaft 258 by a large friction force, for example. As a result, when the roller shaft 258 rotates, the mesh sheet 256 can continuously move on a single orbit. Thus, the relative movement of the mesh sheet 256 relative to the dust box 245 is performed. An orbit of the mesh sheet 256 is determined by the roller shaft 258 and the thin shafts 259a and 259b. The first driven gear 246 is fixed to the roller shaft 258.

A coating film of a conductive material is formed on a surface of the mesh sheet 256. A metallic material such as aluminum can be used for the conductive material. The coating film is stacked on a surface of the insulating body 257. For example, a sputtering method can be used to form the coating film. An air flow passage that penetrates in an air flowing direction of the airflow is secured as is.

A ground terminal 262 is formed in the belt body 255. The ground terminal 262 continues from the coating film. When the air filter assembly 234 is set in the body 226, the ground terminal 262 is connected to the ground of the body 226. Upon such connection, the body 226 may be formed with an electric contact (not shown) that comes in contact with the ground terminal 262. The potential of the coating film may be dropped to the ground through the contact. The electric contact that comes in contact with the ground terminal 262 may be formed in the frame body 37 of the holding part 236. In this case, wiring that extends from the contact of the frame body 37 may be connected to the contact on the body 226.

### (3) Operation of Indoor Unit

During a normal cooling operation and a normal warming operation, the air filter 35 is located at the reference position. When the blowing fan 24 is operated, the airflow is generated along the passage 81 from the suction opening 33 toward the blowout opening 28 in the body 26. The air suctioned from the suction opening 33 passes through the air filter 35 and then passes through the indoor heat exchanger 14. In the indoor heat exchanger 14, the heat is exchanged between the airflow and the refrigerant. During the cooling operation, the air is cooled by the indoor heat exchanger 14 and blown out of the blowout opening 28. During the warming operation, the air is warmed by the indoor heat exchanger 14 and blown out of the blowout opening 28. In such a manner, the cold air or warm air is generated.

When the airflow passes through the air filter 35, dust particles larger than the mesh size of the mesh sheet 59 cannot pass through the mesh. Thus, the large dust particles are caught by the front surface of the air filter 35. Fine particles of dust or the like smaller than the mesh size are adhered to the rear surface of the air filter 35 due to the principle of electric dust collection, which will be described below. Thus, the dust and the like are removed from the airflow flowing toward the indoor heat exchanger 14. The clean airflow flows into the indoor heat exchanger 14. The clean cold air or clean warm air is blown out of the blowout opening 28.

An operation of the filter cleaning unit 43 when the air filter 35 is cleaned will be described. In accordance with the rotational operation of the brush pedestal 67, the brush bristles 69 of the cleaning brush 66 come in contact with the front surface of the air filter 35. At this time, the rear surface of the air filter 35 is received by the receiving surface 72 of the brush receiver 71. The air filter 35 is sandwiched between the brush bristles 69 and the receiving surface 72. When the second driven gear 52 is driven, the air filter 35 moves back and forth along the filter rails 38 and 39. In accordance with the movement of the air filter 35, the brush bristles 69 brush the front surface of the air filter 35. Accordingly, the brush bristles 69 entangle and catch the large dust particles from the front surface of the air filter 35. The entangled and caught dust particles are collected in the upper dust box 45. The charging of the rear surface of the air filter 35 is eliminated by the ground. For this reason, the fine particles are dropped off from the rear surface of the air filter 35 when the receiving surface 72 and the air filter 35 come in contact with each other. The dropped fine particles are collected in the lower dust box 46.

When the air filter 35 is cleaned, the control unit 84 switches an operation mode of the cleaning brush 66 between a first cleaning mode and a second cleaning mode. In the first cleaning mode, the cleaning brush 66 cleans the first region FR and the second region SR of the air filter 35. At this time, the control unit 84 causes the air filter 35 to reciprocate between the reference position and the upper limit position, and also causes the air filter 35 to reciprocate between the reference position and the lower limit position. Thus, the entire air filter 35 is cleaned. Here, compared to the number of reciprocation in the first region FR, the number of cleaning in the second region SR is particularly set to be small. The first region FR is cleaned more meticulously than the second region SR. A dust collecting effect in the first region FR is high. Thus, the air filter 35 can be effectively cleaned by cleaning the first region FR more meticulously than the second region SR. In the second cleaning mode, the cleaning brush 66 cleans the first region FR but not the second region SR. In the second cleaning mode, the cleaning of the second region SR is avoided. At this time, the control unit 84 causes the air filter 35 to reciprocate between the reference position and the upper limit position. The air filter 35 does not move toward the lower limit position. Accordingly, only the first region FR of the air filter 35 is cleaned. The control unit 84 has the first cleaning mode and the second cleaning mode in combination.

The air filter 35 can be attached to or detached from the body 26. The frame 58 of the air filter 35 is formed to have higher strength than the mesh sheet 59. Accordingly, the mesh sheet 59 can be electrically connected to the ground potential via the frame 58. Thus, the damage of the mesh sheet 59 can be prevented.

The dust particles larger than the mesh size of the mesh sheet 59 are entangled by the front surface of the mesh sheet 59 (the first surface 35a). The fine particles smaller than the mesh size are adhered to the rear surface of the mesh sheet 59 (the second surface 35b). The frame 58 is fixed to the rear surface of the mesh sheet 59. Accordingly, the flatness of the front surface of the mesh sheet 59 is maintained. Thus, the dust can be reliably scraped off from the front surface by cleaning the front surface of the mesh sheet 59 with use of the brush with short bristles. The mesh sheet 59 is electrically connected to the ground. Accordingly, the potential of the fine particles is decreased. Thus, the fine particles adhered to the mesh sheet 59 can be cleaned relatively easily.

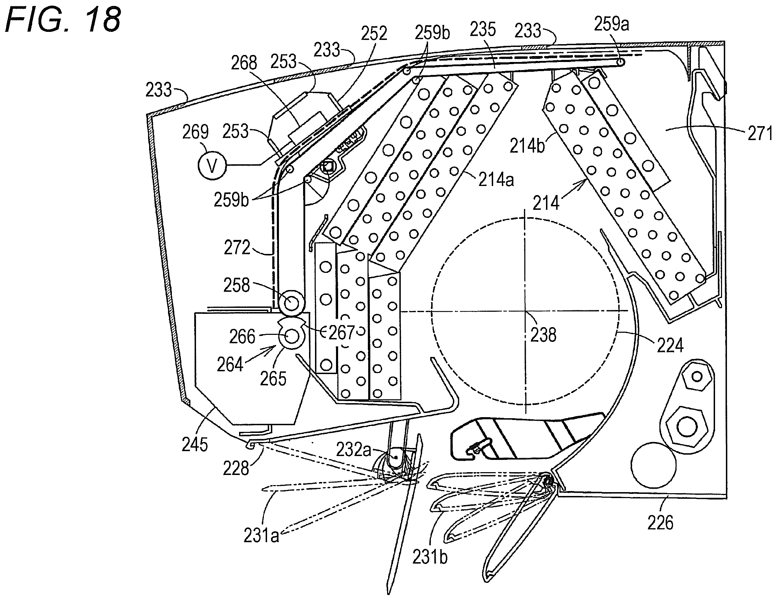

In addition, the fine particles of dust or the like in the airflow may be charged at a specified polarity by discharging from a charged electrode 268 illustrated in Fig. 18. The charged fine particles are adhered to the conductive material on the mesh sheet 256 by a Coulomb force. Accordingly, not only dust particles larger than the mesh size, but also fine particles smaller than the mesh size are also caught by the air filter 235. The width of an opening of the so-called mesh of the mesh sheet 256 can be set greater than the length of an air flow passage of the airflow. As a result, the pressure loss in the mesh sheet 256 of the air filter 235 is substantially suppressed. The air filter 235 can effectively catch the fine particles while avoiding the pressure loss. Thus, the cleanliness degree of the airflow can be increased without increasing the flow resistance of the airflow. Here, the airflow sequentially passes through the front mesh sheet 261a and the rear mesh sheet 261b. Accordingly, compared to a case where one mesh sheet is provided, the charged fine particles are more likely to be adhered to the coating film of the conductive material. Meanwhile, the flow resistance of the mesh sheet 256 is small. Thus, the cleanliness degree of the airflow can be increased without increasing the flow resistance of the airflow. Instead of the front and rear pair of mesh sheets 261a and 261b, three or more of mesh sheets 256 that are arranged in series in the air flowing direction may be used.

When the air filter 235 is cleaned, the filter cleaning unit 243 is operated. In accordance with the rotational operation of a brush pedestal 265, brush bristles 267 of a cleaning brush 264 come in contact with a front surface of the air filter 235. At this time, the mesh sheet 256 is received by the roller shaft 258. The mesh sheet 256 is sandwiched between the brush bristles 267 and the roller shaft 258. When the first driven gear 246 is driven, the mesh sheet 256 moves on an orbit. The relative movement of the mesh sheet 256 relative to the brush bristles 267 and the roller shaft 258 is performed in a direction parallel to a perpendicular surface that is orthogonal to horizontal axes 232a and 232b. In accordance with the relative movement, the brush bristles 267 brush a front surface of the mesh sheet 256. Thus, the brush bristles 267 entangle and catch the large dust particles from the front surface of the mesh sheet 256. The entangled and caught dust is collected in the dust box 245.

### (4) Principle of Electric Dust Collection

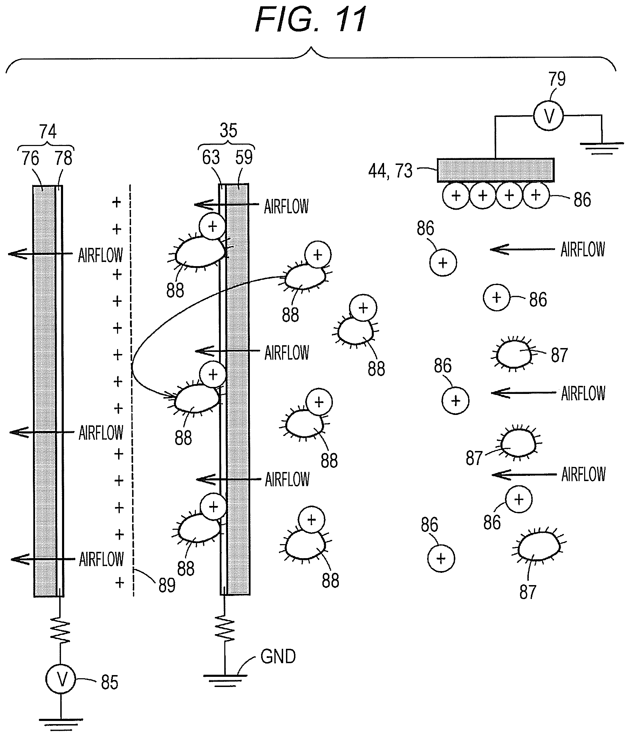

As illustrated in Fig. 11, the charged electrode 73, the air filter 35, and the repelling filter 74 are arranged in the airflow that is generated in the blowing fan 24. The air filter 35 is arranged downstream of the charged electrode 73 in the air flowing direction of the airflow. The repelling filter 74 is arranged downstream of the air filter 35. The charged electrode 73 discharges electricity to the airflow. Here, positive ions 86 are generated in the airflow due to the discharging. The positive ions 86 are adhered to fine particles 87 of dust or the like in the airflow. Accordingly, the fine particles 87 are charged to a positive polarity (hereinafter, the charged fine particles are referred to as "charged fine particles 88").

When the high voltage is supplied to the coating film 78 of the repelling filter 74, a surface of the mesh sheet 76 of the repelling filter 74 is positively charged. The positively charged mesh sheet 76 forms an electric barrier 89 that is oriented to cross the air flowing direction of the airflow. Here, the electric barrier 89 is orthogonal to the air flowing direction of the airflow. The electric barrier 89 continues along the surface of the mesh sheet 76. Here, the electric barrier 89 has the same polarity as the charged electrode 73, that is, the positive polarity.

The airflow passes through the air flow passage that is partitioned by the mesh of the mesh sheet 59. The charged fine particles 88 carried in the airflow are smaller than the mesh size of the mesh sheet 59, and thus pass through the mesh sheet 59 of the air filter 35. The charged fine particles 88 collide with the electric barrier 89. The charged fine particles 88 and the electric barrier 89 have the same polarity. Thus, the charged fine particles 88 bounce off the electric barrier 89. Accordingly, an advancing direction of the charged fine particles 88 is changed to an opposite direction. Then, the charged fine particles 88 are easily adhered to the coating film 63 of the air filter 35. In such a manner, the fine particles 87 are caught by the air filter 35.

The coating film 63 of the air filter 35 is connected to a ground GND. When the charged fine particles 88 are adhered to the coating film 63 of the air filter 35, electric charges are moved between the charged fine particles 88 and the ground GND. A charged state of the charged fine particles 88 is eliminated. Accordingly, the air filter 35 is prevented from having the potential of the same polarity as the charged electrode 73. Even when an adhesion amount of the charged fine particles 88 is increased, new charged fine particles 88 can be reliably adhered to the air filter 35. Here, the polarity of the air filter 35 as the dust collecting electrode is the ground. However, it is only necessary that the air filter 35 has the polarity that allows the adhesion of the charged fine particles 88. In other words, the air filter 35 may have an opposite polarity from that of the charged fine particles 88, that is, a negative polarity.

In the mesh sheet 59 of the air filter 35, the front surface (the first surface 35a) receives the airflow, and the rear surface (the second surface 35b on the opposite side of the first surface 35a) supports the coating film 63. Similarly, in the repelling filter 74, the mesh sheet 76 supports the coating film 78 on the surface that faces the coating film 63 of the air filter 35. Accordingly, the coating film 78 on the repelling filter 74 faces the coating film 63 on the air filter 35. The coating film 63 of the air filter 35 and the coating film 78 of the repelling filter 74 are arranged between the two mesh sheets 59 and 76. Thus, a user is prevented from directly touching the coating film 78, to which the high voltage is supplied, from the outer side. In addition, a surface coated with the metallic material (the coating film 63) is more even than a surface of the insulating body formed of the resin material. Thus, the air filter 35 can be easily cleaned by arranging the surface, to which the charged fine particles 88 are adhered, on the repelling filter 74 side.

The mesh sheet 59 of the air filter 35 is provided by combining the plural warp fibers and the plural weft fibers in the grid pattern. When the air filter 35 is set in the body 26, the frame 58 surrounds the passage 81 along the transverse plane 82. The warp fibers and the weft fibers of the mesh sheet 59 traverse the passage 81. For each warp fiber and each weft fiber, the coating film 63 is connected to the frame 58. In such a manner, a current passage is secured between the mesh sheet 59 and the frame 58 for each warp fiber and each weft fiber. The mesh sheet 59 is electrically connected to the frame 58 in an extensive region. The electric charges can efficiently flow between the mesh sheet 59 and the frame 58. Even when the mesh sheet 59 has a slight electric resistance, the electric charges can flow from the mesh sheet 59 to the frame 58. Accordingly, the electric charges do not stagnate on the mesh sheet 59. Thus, the charging of the mesh sheet 59 can be reliably avoided.

Here, the insulating body is maintained on the front surface of the mesh sheet 59. On the front surface of the mesh sheet 59, the adhesion of the charged fine particles 88 can be prevented. Upon cleaning of the air filter 35, the front surface of the mesh sheet 59 can be easily cleaned by simply removing the dust particles larger than the mesh size from the front surface. The frame 58 is formed of the conductive resin material. Thus, the frame 58 can maintain the specified strength and have the flexibility.

The warp fibers and the weft fibers of the mesh sheet 59 may be formed of conductive fibers. Upon forming of the conductive fiber, layers of carbon nanotube (CNT) may be formed on an outer surface of the resin fiber. Accordingly, the current passage can be secured between the mesh sheet 59 and the frame 58 for each warp fiber and each weft fiber of the mesh sheet 59. The mesh sheet 59 is electrically connected to the frame 58 in the extensive region. The electric charges can efficiently flow between the mesh sheet 59 and the frame 58. When the potential of the mesh sheet 59 is dropped to the ground GND, the charging of the mesh sheet 59 can be reliably avoided.

An example in which the positive ions are dispersed from the ionizer 55 is illustrated in Fig. 11. However, negative ions may be dispersed in another embodiment. In such a case, the polarity of the repelling filter 74 may be negative, and the polarity of the dust collecting electrode (the air filter 35) may be positive or the ground.

### (5) Configuration of Air Cleaner

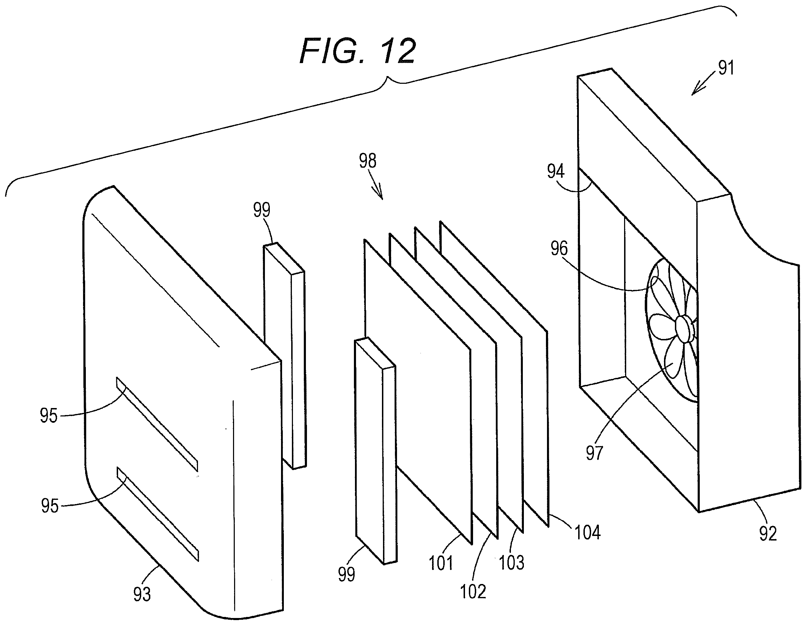

Fig. 12 schematically illustrates a configuration of an air cleaner 91 according to an embodiment of this disclosure. The air cleaner 91 includes a body 92 and a front cover 93. The front cover 93 is joined to a front surface of the body 92. A housing space 94 is partitioned in the body 92. The housing space 94 is closed by the front cover 93. A front vent opening 95 that leads to the housing space 94 is formed in the front cover 93.

A rear vent opening 96 is formed in a wall surface of the housing space 94 that faces the front cover 93. A blowing fan 97 is arranged in the rear vent opening 96. When the blowing fan 97 is actuated, the air is suctioned from the front vent opening 95 into the housing space 94. The air flows from the housing space 94 into the rear vent opening 96. Then, the air is discharged to the outside from the rear vent opening 96. Accordingly, the airflow is generated from the front vent opening 95 toward the rear vent opening 96 in the housing space 94.

An electric dust collecting unit (an electric dust collector) 98 is housed in the housing space 94. The electric dust collecting unit 98 includes a pair of charged electrodes 99. The charged electrodes 99 are formed to be vertically long along right and left wall surfaces of the housing space 94. The airflow moves in a space between the charged electrodes 99. By the actions of the charged electrodes 99, fine particles of dust or the like in the airflow are charged to a specified polarity.

The electric dust collecting unit 98 includes a first air filter 101, a first repelling filter 102, a second air filter 103, and a second repelling filter 104. The first air filter 101 and the second air filter 103 may have the same configuration as the above-described air filter 35. In other words, a frame thereof surrounds the passage of the airflow along a transverse plane that traverses the passage of the airflow. A mesh sheet is supported by the frame. The mesh sheet blocks the passage along the transverse plane of the passage. A coating film of a conductive material is formed on a rear surface of the mesh sheet. The coating film is connected to the ground. A mesh of the mesh sheet partitions the air flow passage that penetrates in the air flowing direction of the airflow. Similarly, the first repelling filter 102 and the second repelling filter 104 may have the same configuration as the above-described repelling filter 74. In other words, the coating film of the conductive material is formed on a front surface of the mesh sheet. A high-voltage supply is connected to the coating film. The mesh of the mesh sheet partitions the air flow passage that penetrates in the air flowing direction of the airflow. In the housing space 94, the airflow sequentially passes through the charged electrodes 99, the first air filter 101, the first repelling filter 102, the second air filter 103, and the second repelling filter 104. A coating film of the first repelling filter 102 faces the coating film of the first air filter 101 at an equally spaced interval. Similarly, a coating film of the second repelling filter 104 faces a coating film of the second air filter 103 at an equally spaced interval. Here, the first repelling filter 102 can function as the charged electrode with respect to the second air filter 103 and the second repelling filter 104. In addition, the charged electrode may further be arranged between the first repelling filter 102 and the second air filter 103. By following the above-described principle, in the electric dust collecting unit 98, the fine particles of dust or the like are caught by the first air filter 101 and the second air filter 103. In the air cleaner 91, the first air filter 101 may be combined with the filter cleaning unit 43 in the same manner as described above.

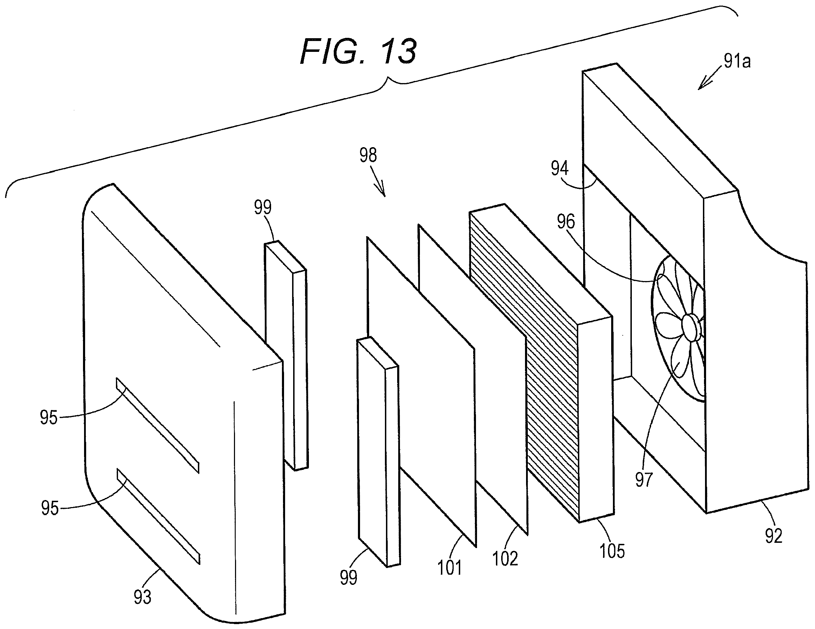

As illustrated in Fig. 13, an HEPA filter 105 may be used in the air cleaner 91a instead of the second air filter 103 and the second repelling filter 104. The HEPA filter 105 can catch fine particles that pass through the first air filter 101 without being charged. The electric dust collecting unit 98 can function as a pre-filter of the HEPA filter 105. In such a case, the pre-filter catches the fine particles. Thus, compared to a case where the HEPA filter 105 independently catches the fine particles, the frequency of replacement of the HEPA filter 105 can be reduced. The first air filter 101 may be combined with the filter cleaning unit in the air cleaner 91a in the same manner as described above. (6) Configuration of Ventilator

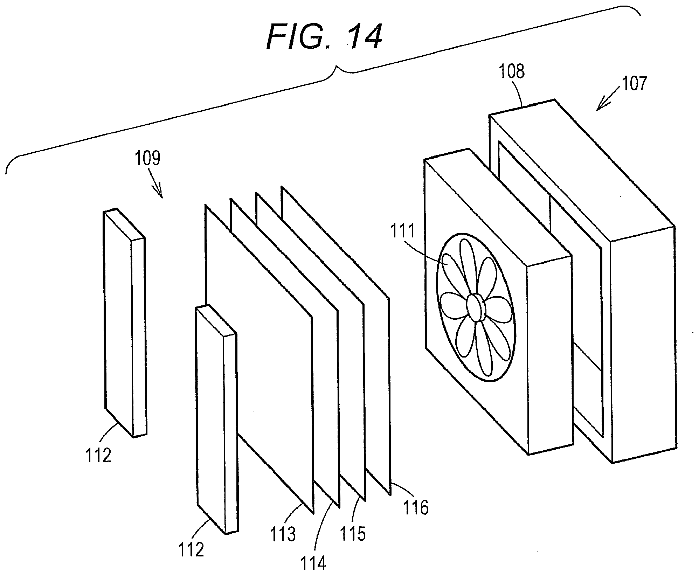

Fig. 14 schematically illustrates a configuration of a ventilator 107 according to an embodiment of this disclosure. The ventilator 107 includes a casing 108. An electric dust collecting unit (an electric dust collector) 109 and a blowing fan 111 are housed in the casing 108. The electric dust collecting unit 109 includes a charged electrode 112, a first air filter 113, a first repelling filter 114, a second air filter 115, and a second repelling filter 116. The charged electrode 112, the first air filter 113, the first repelling filter 114, the second air filter 115, and the second repelling filter 116 respectively function in the same manner as the charged electrodes 99, the first air filter 101, the first repelling filter 102, the second air filter 103, and the second repelling filter 104, which are described above. When the blowing fan 111 is operated, the airflow sequentially passes through the charged electrodes 112, the first air filter 113, the first repelling filter 114, the second air filter 115, and the second repelling filter 116. The first air filter 113 and the second air filter 115 catch fine particles in the airflow. Such a ventilator 107 can be mounted in an air duct that connects the indoor and the outdoor to each other. Upon introduction of the ambient air, the fine particles of dust or the like in the air are efficiently caught. The first air filter 113 may be combined with the filter cleaning unit in the ventilator 107 in the same manner as described above. In addition, the HEPA filter may be used instead of the second air filter 115 and the second repelling filter 116.

### (7) Configuration of Clean Room

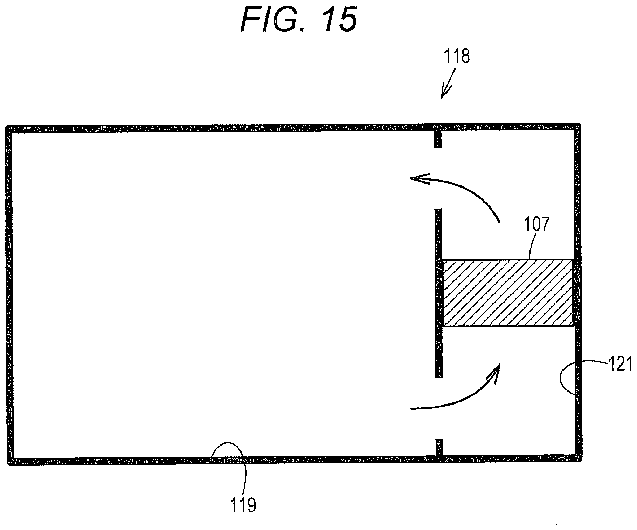

Fig. 15 schematically illustrates a configuration of a clean room 118 according to an embodiment of this disclosure. A room 119 is provided as a closed space. An air duct 121 is connected to the room 119. The air duct 121 has an opening at a first position in the room 119. The air duct 121 also has another opening at a second position that is away from the first position. The above-described ventilator 107 can be incorporated in the air duct 121. The air is circulated through the air duct 121. Every time of the circulation, the air is cleaned in the ventilator 107. In such a manner, the space in the clean room 118 is kept clean.

### (8) Configuration of Indoor Unit According to Second Embodiment

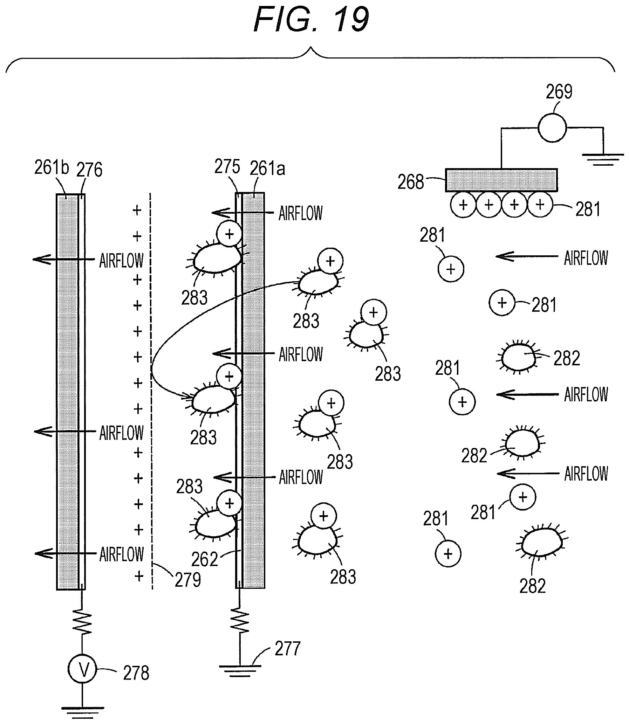

Fig. 19 schematically illustrates the principle of electric dust collection in an indoor unit according to a second embodiment.

A configuration of the indoor unit according to the second embodiment will be described mainly as to the configuration that differs from the configuration of the indoor unit that has been described so far. The air filter 235 has the front and rear pair of mesh sheets 261a and 261b. The mesh sheets 261a and 261b are continuously and annularly coupled to each other via the insulating material. In the front mesh sheet 261a on an upstream side, a coating film of a conductive coating film 275 is formed at least on a second surface that is on an opposite side of a first surface that receives the airflow. In the rear mesh sheet 261b on a downstream side, a coating film of a conductive coating film 276 is formed on a surface that faces the coating film 275 of the front mesh sheet 261a on the upstream side. A metallic material such as aluminum can be used as the conductive material. The coating films 275 and 276 are respectively stacked on surfaces of the mesh sheets 261a and 261b. For example, a sputtering method can be used to form the coating films 275 and 276. An air flow passage that penetrates in the air flowing direction of the airflow is secured as is.

The coating film 275 of the front mesh sheet 261a and the coating film 276 of the rear mesh sheet 261b are electrically isolated from each other. The coating film 275 of the front mesh sheet 261a is connected to a ground 277 at the ground terminal 262 in the same manner as described above. The coating film 276 of the rear mesh sheet 261b is connected to a high-voltage supply 278 of the body 26 via wiring (not shown). The coating film 276 of the rear mesh sheet 261b forms an electric barrier 279 that has the same polarity as a charged electrode 268. Here, the coating film 275 of the front mesh sheet 261a functions as the dust collecting electrode, and the coating film 276 of the rear mesh sheet 261b functions as the repelling electrode.

The mesh sheets 261a and 261b are annularly coupled to each other via the insulating material. Thus, even when the high voltage is supplied to the coating film 276, the coating film 275 of the front mesh sheet 261a is electrically isolated.

The coating film 276 of the rear mesh sheet 261b desirably faces the coating film 275 of the front mesh sheet 261a at an equally spaced interval. Accordingly, uneven distribution of the electric potential can be suppressed in the electric barrier 279. As a result, charged fine particles 283 can be thoroughly adhered on the coating film 275 of the front mesh sheet 261a. Charged fine particles 288 are not unevenly distributed on the air filter 235. Accordingly, the charged fine particles 288 can be efficiently caught in an entire portion of the air filter 235 that faces an electric barrier 289. Here, when a distance between the coating film 276 and the coating film 275 is not constant, an amount of the charged fine particles 288 adhered to the air filter 235 becomes uneven. As a result, the air filter 235 cannot efficiently catch the charged fine particles 288. Furthermore, a spark may be generated in a portion near the air filter 235. However, since the coating film 276 of the rear mesh sheet 261b faces the coating film 275 of the front mesh sheet 261a at the equally spaced interval as described above, generation of the spark therebetween can be prevented.

In addition, the filter for the electric dust collector according to the embodiments of this disclosure may be any of the following first to fourth filters for an electric dust collector.

The first filter for the electric dust collector includes: a conductive filter frame supported by a casing of a dust collector along a transverse plane traversing a passage of airflow, surrounding the passage, and connected to a conductive body of a ground potential provided in the casing; and a mesh sheet coupled to the filter frame, arranged along the transverse plane, and at least partially having a conductive material connected to the filter frame on a surface.

In the second filter for the electric dust collector according to the first filter for the electric dust collector, the mesh sheet has a conductive film as the conductive material at least on a second surface on an opposite side of a first surface that receives the airflow and the filter frame is in contact with a surface of the conductive film.

In the third filter for the electric dust collector according to the first or second filter for the electric dust collector, the mesh sheet has plural fibers that traverse the passage and the conductive material is connected to the filter frame for each of the fibers.

In the fourth filter for the electric dust collector according to the first or second filter for the electric dust collector, the mesh sheet has conductive fibers which traverse the passage and function as the conductive material, and each of the conductive fibers is connected to the filter frame.

Furthermore, the electric dust collector according to the embodiments of this disclosure may be any of the following first to third electric dust collectors.

The first electric dust collector includes: a casing for forming a passage of airflow and having a conductive body; a charged electrode arranged in the passage and charging a substance in the airflow by discharging electricity to the airflow; a conductive filter frame supported by the casing along a transverse plane traversing the passage, surrounding the passage, and connected to the conductive body; and a filter mesh sheet coupled to the filter frame, arranged along the transverse plane, and at least partially having a conductive material connected to the filter frame.

In the second dust collector according to the first electric dust collector, the filter mesh sheet has a conductive film as the conductive material at least on a second surface on an opposite side of a first surface for receiving the airflow and the filter frame comes in contact with a surface of the conductive film.

The third dust collector according to the second electric dust collector further includes a repelling electrode that is arranged along the transverse plane on a downstream side of the filter mesh sheet along an air flowing direction of the airflow, is formed of a mesh sheet, and has a conductive material for forming an electric barrier with the same polarity as the charged electrode at least along a surface that faces the conductive material of the filter mesh sheet.

Moreover, the air conditioner according to the embodiments of this disclosure may be any of the first to sixth air conditioners.

The first air conditioner includes any of the first to third electric dust collectors.

The second air conditioner includes: a casing for forming a passage of airflow; a charged electrode arranged in the passage, and charging a substance in the airflow by discharging electricity to the airflow; a filter arranged along a transverse plane traversing the passage and formed of a mesh sheet at least partially having a conductive material on a surface; and a ground terminal formed in the filter and connecting a ground to the conductive material.

In the third air conditioner according to the second air conditioner, the plural mesh sheets are arranged in series in an air flowing direction of the airflow in the filter.

In the fourth air conditioner according to the third air conditioner, the conductive material is at least formed on a second surface on an opposite side of a first surface for receiving the airflow in the mesh sheet on an upstream side among a front and rear pair of the mesh sheets and that an electric barrier with the same polarity as the charged electrode is formed of the conductive material in the mesh sheet on a downstream side, the conductive material facing the conductive material of the mesh sheet on the upstream side.

In the fifth air conditioner according to the fourth air conditioner, the conductive material of the mesh sheet on the upstream side faces the conductive material of the mesh sheet on the downstream side at an equally spaced interval.

In the sixth air conditioner according to any one of the second to fifth air conditioners, the mesh sheets continue by being annularly coupled via an insulating material.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A filter (35) for an electric dust collector comprising:
a filter frame (58) for surrounding a passage (81) of airflow along a transverse plane (82) that traverses the passage (81) by being supported by a casing (56) of the electric duct collector; and
a mesh sheet (59) arranged along the transverse plane, coupled to the filter frame (58), and having a conductive material at least partially on a surface of the mesh sheet, the conductive material being connected to the filter frame (58); the filter (35) **characterized in that** the filter frame (58) is a conductive filter frame.

2. The filter (35) for the electric dust collector according to claim 1, wherein the mesh sheet (59) has a conductive film (63) as the conductive material at least on a second surface (35b) on an opposite side of a first surface (35a) that receives the airflow, and the filter frame (58) is in contact with a surface of the conductive film (63).

3. The filter (35) for the electric dust collector according to claim 1 or 2 further comprising a ground terminal that is connected to a conductive body of a ground potential provided in the casing (56).

4. The filter (35) for the electric dust collector according to any one of claims 1 to 3, wherein the mesh sheet (59) has a plurality of fibers that traverses the passage (81), and the conductive material is connected to the filter frame (58) for each of the fibers.

5. The filter (35) for the electric dust collector according to any one of claims 1 to 3, wherein the mesh sheet (59) has conductive fibers that function as the conductive material traversing the passage (81), and each of the conductive fibers is connected to the filter frame (58).

6. An electric dust collector (44) comprising:
a casing (56) that forms a passage (81) of airflow and has a conductive body;
a charged electrode (73) arranged in the passage (81) and charging a substance in the airflow by discharging electricity to the airflow; and
the filter (35) for the electric dust collector according to any one of claims 1 to 5, in which the conductive filter frame (58) is connected to the conductive body.

7. The electric dust collector (44) according to claim 6 further comprising a repelling electrode (74), wherein
the repelling electrode (74) is arranged along the transverse plane (82) on a downstream side of the mesh sheet (59) in an air flowing direction of the airflow, the mesh sheet (59) being included in the filter (35) for the electric dust collector according to any one of claims 1 to 5, and
the repelling electrode (74) is formed of a mesh sheet, and has a conductive material at least on a surface that faces the conductive material of the mesh sheet (59) included in the filter (35) for the electric dust collector according to any one of claims 1 to 5, the conductive material being provided for forming an electric barrier with an identical polarity to the charged electrode (73).

8. An air conditioner (11) comprising:
a casing (56) that forms a passage (81) of airflow;
a charged electrode (73) arranged in the passage (81) and charging a substance in the airflow by discharging electricity to the airflow; and
the filter (35) for the electric dust collector according to any one of claims 1 to 5.

9. The air conditioner (11) according to claim 8, wherein the filter (35) has a plurality of the mesh sheets (59) that is arranged in series in an air flowing direction of the airflow.

10. The air conditioner (11) according to claim 9, wherein, of a front and rear pair of the mesh sheets (59), the mesh sheet on an upstream side has the conductive material at least formed on a second surface (35b) on an opposite side of a first surface (35a) that receives the airflow, and the mesh sheet on a downstream side has a conductive material for forming an electric barrier (89) that faces the conductive material on the second surface (35b) and has an identical polarity to the charged electrode (73).

11. The air conditioner (11) according to claim 10, wherein the conductive material formed on the second surface (35b) faces the conductive material included in the mesh sheet on the downstream side at an equally spaced interval.

12. The air conditioner (11) according to any one of claims 8 to 11, wherein the mesh sheets (59) are continuously and annularly coupled to each other via insulating materials.

13. The air conditioner (11) according to any one of claims 8 to 12 further comprising the electric dust collector (44) according to claim 6 or 7.

## Patentansprüche

1. Filter (35) für einen elektrischen Staubabscheider, umfassend:
einen Filterrahmen (58) zum Umgeben eines Durchlasses (81) für einen Luftstrom entlang einer Transversalebene (82), die den Durchlass (81) durchquert, indem er von einem Gehäuse (56) des elektrischen Staubabscheiders gestützt wird, und
ein Gitterblatt (59), das entlang der Transversalebene angeordnet ist, mit dem Filterrahmen (58) verbunden ist und wenigstens teilweise auf einer Oberfläche des Gitterblatts ein leitfähiges Material aufweist, wobei das leitfähige Material mit dem Filterrahmen (58) verbunden ist,
wobei der Filter (35) **dadurch gekennzeichnet ist, dass** der Filterrahmen (58) ein leitfähiger Filterrahmen ist.

2. Filter (35) für den elektrischen Staubabscheider nach Anspruch 1, wobei das Gitterblatt (59) als leitfähiges Material wenigstens auf einer zweiten Oberfläche (35b) auf einer Seite, die einer ersten, den Luftstrom empfangenden Oberfläche (35a) gegenüberliegt, eine leitfähige Schicht (63) aufweist, und wobei der Filterrahmen (58) in Kontakt mit einer Oberfläche der leitfähigen Schicht (63) ist.

3. Filter (35) für den elektrischen Staubabscheider nach Anspruch 1 oder 2, ferner umfassend einen Erdungsanschluss, der mit einem leitfähigen Körper eines in dem Gehäuse (56) vorgesehenen Erdpotentials verbunden ist.

4. Filter (35) für den elektrischen Staubabscheider nach einem der Ansprüche 1 bis 3, wobei das Gitterblatt (59) mehrere Fasern aufweist, die den Durchlass (81) durchqueren, und das leitfähige Material für jede der Fasern mit dem Filterrahmen (58) verbunden ist.

5. Filter (35) für den elektrischen Staubabscheider nach einem der Ansprüche 1 bis 3, wobei das Gitterblatt (59) leitfähige Fasern aufweist, die als das leitfähige Material dienen, das den Durchlass (81) durchquert, und jede der leitfähigen Fasern mit dem Filterrahmen (58) verbunden ist.

6. Elektrischer Staubabscheider (44), umfassend:
ein Gehäuse (56), das einen Durchlass (81) für einen Luftstrom bildet und einen leitfähigen Körper aufweist,
eine geladene Elektrode (73), die in dem Durchlass (81) angeordnet ist und durch Entladen von Elektrizität in den Luftstrom einen Stoff in dem Luftstrom auflädt, und
den Filter (35) für den elektrischen Staubabscheider nach einem der Ansprüche 1 bis 5, bei dem der leitfähige Filterrahmen (58) mit dem leitfähigen Körper verbunden ist.

7. Elektrischer Staubabscheider (44) nach Anspruch 6, ferner umfassend eine abstoßende Elektrode (74), wobei
die abstoßende Elektrode (74) entlang der Transversalebene (82) auf einer strömungsabwärts gelegenen Seite des Gitterblatts (59) in einer Luftströmungsrichtung des Luftstroms angeordnet ist, wobei das Gitterblatt (59) in dem Filter (35) für den elektrischen Staubabscheider nach einem der Ansprüche 1 bis 5 enthalten ist, und
die abstoßende Elektrode (74) aus einem Gitterblatt gebildet ist und auf wenigstens einer Oberfläche, die dem leitfähigen Material des Gitterblatts (59) zugewandt ist, das in dem Filter (35) für den elektrischen Staubabscheider nach einem der Ansprüche 1 bis 5 enthalten ist, ein leitfähiges Material aufweist, wobei das leitfähige Material zum Bilden einer elektrischen Schranke mit einer mit der geladenen Elektrode (73) identischen Polarität vorgesehen ist.

8. Klimaanlage (11), umfassend:
ein Gehäuse (56), das einen Durchlass (81) für einen Luftstrom bildet,
eine geladene Elektrode (73), die in dem Durchlass (81) angeordnet ist und durch Entladen von Elektrizität in den Luftstrom einen Stoff in dem Luftstrom auflädt, und
den Filter (35) für den elektrischen Staubabscheider nach einem der Ansprüche 1 bis 5.

9. Klimaanlage (11) nach Anspruch 8, wobei der Filter (35) mehrere Gitterblätter (59) aufweist, die in einer Luftströmungsrichtung des Luftstroms in Reihe angeordnet sind.

10. Klimaanlage (11) nach Anspruch 9, wobei, von einem vorderen und einem hinteren Paar der Gitterblätter (59), bei dem Gitterblatt auf einer strömungsaufwärts gelegenen Seite das leitfähige Material wenigstens auf einer zweiten Oberfläche (35b) auf einer Seite, die der ersten, den Luftstrom empfangenden Oberfläche (35a) gegenüberliegt, ausgebildet ist, und das Gitterblatt auf einer strömungsabwärts gelegenen Seite ein leitfähiges Material zum Bilden einer elektrischen Schranke (89) aufweist, das dem leitfähigen Material auf der zweiten Oberfläche (35b) zugewandt ist und eine mit der geladenen Elektrode (73) identische Polarität aufweist.

11. Klimaanlage (11) nach Anspruch 10, wobei das leitfähige Material, das auf der zweiten Oberfläche (35b) ausgebildet ist, dem leitfähigen Material, das in dem Gitterblatt auf der strömungsabwärts gelegenen Seite enthalten ist, in einem gleichmäßigen Abstand zugewandt ist.

12. Klimaanlage (11) nach einem der Ansprüche 8 bis 11, wobei die Gitterblätter (59) über Isoliermaterialien durchgehend und ringförmig miteinander verbunden sind.

13. Klimaanlage (11) nach einem der Ansprüche 8 bis 12, ferner umfassend den elektrischen Staubabscheider (44) nach Anspruch 6 oder 7.

## Revendications

1. Filtre (35) pour un collecteur de poussière électrique comprenant :
un cadre de filtre (58) pour entourer un passage (81) d'écoulement d'air le long d'un plan transversal (82) qui traverse le passage (81) en étant supporté par un carter (56) du collecteur de poussière électrique ; et
une feuille maillée (59) agencée le long du plan transversal, accouplée au cadre de filtre (58), et comportant un matériau conducteur au moins partiellement sur une surface de la feuille maillée, le matériau conducteur étant connecté au cadre de filtre (58) ;
le filtre (35) étant **caractérisé en ce que** le cadre de filtre (58) est un cadre de filtre conducteur.

2. Filtre (35) pour le collecteur de poussière électrique selon la revendication 1, dans lequel la feuille maillée (59) comporte un film conducteur (63) en tant que matériau conducteur au moins sur une deuxième surface (35b) d'un côté opposé à une première surface (35a) qui reçoit l'écoulement d'air, et le cadre de filtre (58) est en contact avec une surface du film conducteur (63).

3. Filtre (35) pour le collecteur de poussière électrique selon la revendication 1 ou 2 comprenant en outre une borne de masse qui est connectée à un corps conducteur ayant un potentiel de masse prévu dans le carter (56).

4. Filtre (35) pour le collecteur de poussière électrique selon l'une quelconque des revendications 1 à 3, dans lequel la feuille maillée (59) comporte une pluralité de fibres qui traversent le passage (81), et le matériau conducteur est connecté au cadre de filtre (58) pour chacune des fibres.

5. Filtre (35) pour le collecteur de poussière électrique selon l'une quelconque des revendications 1 à 3, dans lequel la feuille maillée (59) comporte des fibres conductrices qui fonctionnent en tant que matériau conducteur traversant le passage (81), et chacune des fibres conductrices est connectée au cadre de filtre (58).

6. Collecteur de poussière électrique (44) comprenant :
un carter (56) qui forme un passage (81) d'écoulement d'air et qui comporte un corps conducteur ;
une électrode chargée (73) agencée dans le passage (81) et chargeant une substance dans l'écoulement d'air en déchargeant de l'électricité vers l'écoulement d'air ; et
le filtre (35) pour le collecteur de poussière électrique selon l'une quelconque des revendications 1 à 5, dans lequel le cadre de filtre conducteur (58) est connecté au corps conducteur.

7. Collecteur de poussière électrique (44) selon la revendication 6 comprenant en outre une électrode de répulsion (74), dans lequel
l'électrode de répulsion (74) est agencée le long du plan transversal (82) d'un côté aval de la feuille maillée (59) dans la direction d'écoulement d'air de l'écoulement d'air, la feuille maillée (59) étant incluse dans le filtre (35) pour le collecteur de poussière électrique selon l'une quelconque des revendications 1 à 5, et
l'électrode de répulsion (74) est constituée d'une feuille maillée, et comporte un matériau conducteur au moins sur une surface qui est orientée vers le matériau conducteur de la feuille maillée (59) incluse dans le filtre (35) pour le collecteur de poussière électrique selon l'une quelconque des revendications 1 à 5, le matériau conducteur étant prévu pour former une barrière électrique avec une polarité identique à celle de l'électrode chargée (73).

8. Climatiseur (11) comprenant :
un carter (56) qui forme un passage (81) d'écoulement d'air ;
une électrode chargée (73) agencée dans le passage (81) et chargeant une substance dans l'écoulement d'air en déchargeant de l'électricité vers l'écoulement d'air ; et
le filtre (35) pour le collecteur de poussière électrique selon l'une quelconque des revendications 1 à 5.

9. Climatiseur (11) selon la revendication 8, dans lequel le filtre (35) comporte une pluralité des feuilles maillées (59) qui sont agencées en série dans la direction d'écoulement d'air de l'écoulement d'air.

10. Climatiseur (11) selon la revendication 9, dans lequel, parmi une paire avant et arrière des feuilles maillées (59), la feuille maillée d'un côté amont comporte le matériau conducteur au moins formé sur une deuxième surface (35b) d'un côté opposé à une première surface (35a) qui reçoit l'écoulement d'air, et la feuille maillée d'un côté aval comporte un matériau conducteur pour former une barrière électrique (89) qui est orienté vers le matériau conducteur sur la deuxième surface (35b) et qui a une polarité identique à celle de l'électrode chargée (73).

11. Climatiseur (11) selon la revendication 10, dans lequel le matériau conducteur formé sur la deuxième surface (35b) est orienté vers le matériau conducteur inclus dans la feuille maillée du côté aval avec un intervalle d'espacement uniforme.

12. Climatiseur (11) selon l'une quelconque des revendications 8 à 11, dans lequel les feuilles maillées (59) sont accouplées continûment et de manière annulaire les unes aux autres par l'intermédiaire de matériaux isolants.

13. Climatiseur (11) selon l'une quelconque des revendications 8 à 12 comprenant en outre le collecteur de poussière électrique (44) selon la revendication 6 ou 7.
